# EUROPÄISCHE PATENTSCHRIFT

(11) **EP 3 345 080 B1**
(45) Veröffentlichungstag und Bekanntmachung des Hinweises auf die Patenterteilung: **03.06.2020**
(21) Anmeldenummer: 16753310.8
(22) Anmeldetag: 05.08.2016
(51) Int. Cl.: D06F 33/00

(54) **HAUSHALTSGERÄT MIT EINER ALS EXTERNER ODER INTERNER TOUCHSCREEN AUSGESTALTETEN BEDIENEINRICHTUNG**
HOUSEHOLD APPLIANCE WITH A CONTROL UNIT DESIGNED AS A EXTERNAL OR INTERNAL TOUCH SCREEN
APPAREIL MÉNAGER AVEC UNE UNITÉ DE COMMANDE CONÇU COMME UN ÉCRAN TACTILE EXTERNE OU INTERNE

(30) Priorität: 31.08.2015 DE 102015216629
(43) Veröffentlichungstag der Anmeldung: 11.07.2018
(73) Patentinhaber: BSH Hausgeräte GmbH, 81739 München (DE)
(72) Erfinder: GEYER, Johannes, 85540 Haar (DE); NERO, Marcel, 80337 München (DE); ORTMANN, Christoph, 81675 München (DE)
(86) Internationale Anmeldenummer: PCT/EP2016/068812
(87) Internationale Veröffentlichungsnummer: WO 2017/036735

(56) Entgegenhaltungen:
- EP-A1- 2 706 138
- EP-A1- 2 883 990

## Beschreibung

Die Erfindung betrifft ein Haushaltsgerät mit einer als externer oder interner Touchscreen ausgestalteten Bedieneinrichtung. Die Erfindung betrifft insbesondere ein Haushaltsgerät zur Behandlung von Gegenständen, aufweisend eine Steuereinrichtung und eine als externer oder interner Touchscreen ausgestaltete Bedieneinrichtung, wobei die Steuereinrichtung eingerichtet ist, um auf dem Touchscreen auf mindestens zwei Bildschirmanzeigen B1, B2 unterschiedlicher Hierarchie erste und zweite einstellbare Steuergrößen des Haushaltsgeräts als voneinander abgegrenzte, flächige, berührungsempfindliche Bedienelemente darzustellen. Die Erfindung betrifft außerdem ein Verfahren zum Betrieb eines solchen Haushaltsgeräts.

Zur Bedienung von zahlreichen Geräten wie Computern und Smartphones ist es in den letzten Jahren zunehmend beliebter geworden, eine berührungsempfindliche Bedieneinrichtung zu verwenden. Eine solche berührungsempfindliche Bedieneinrichtung, die eine Anzeigevorrichtung mit einer Bedieneinheit kombiniert und im Folgenden auch als "Touchscreen" bezeichnet wird, ermöglicht prinzipiell eine angenehme und rasche Bedienung des betreffenden Gerätes.

Bekannt sind mittlerweile auch Haushaltsgeräte mit einem Touchscreen.

So beschreiben die DE 10 2011 081 331 A1 und die WO 2013/026734 A1 ein Haushaltsgerät mit einer berührungssensitiven Bedien- und Anzeigeeinrichtung, welche eine Anzeigeeinheit zum Anzeige von Bedieninformationen und ein transparentes Trägerteil aufweist, an welchem zumindest eine kapazitive Sensorelektrode als Teil eines Berührungskondensators angeordnet ist, welche in Überlappung mit der Anzeigeeinheit und in Überlappung mit einer berührungssensitiven Betätigungsfläche der Bedien- und Anzeigeeinrichtung angeordnet ist, wobei die zumindest eine Sensorelektrode aus einem transparenten und elektrisch leitfähigen Lack und/oder Kleber ausgebildet ist, welcher insbesondere Nanoröhrchen aus Kohlenstoff beinhaltet.

Die DE 10 2011 077 902 A1 beschreibt eine kapazitive Bedien- und Anzeigeeinrichtung für ein Haushaltsgerät, mit einem Anzeigefenster mit einer berührungsempfindlichen Bedienfläche, wobei am Anzeigefenster ein Anzeigesymbol angebracht ist, mit mindestens einem Leuchtelement zur Abgabe von Licht zum Hinterleuchten des Anzeigesymbols, und mit einer kapazitiven Sensorelektrode als Teil eines Berührungskondensators, welche in einem Abstand zur Bedienfläche angeordnet sind, so dass beim Berühren der Bedienfläche eine Kapazität des Berührungskondensators veränderbar ist, wobei die Sensorelektrode an einer Leiterplatte angeordnet ist und zwischen der Bedienfläche und der Sensorelektrode ein Element angeordnet ist, welches aus einem elastischen, elektrisch isolierenden Material ausgebildet ist.

Die DE 10 2012 223 779 A1 beschreibt ein Haushaltsgerät mit einer Steuereinrichtung, einer mindestens teilweise lichtdurchlässigen Blende sowie mit einem mindestens teilweise lichtdurchlässigen Bedienpanel mit mindestens einem kapazitiven Sensor zur Auswahl einer Programmfunktion des Haushaltsgerätes durch einen Benutzer des Gerätes, wobei das Bedienpanel ein aus mehreren Schichten bestehendes Kunststoffbauteil aufweist, umfassend (a) eine Anzeigedisplayfolie; (b) eine berührungsempfindliche Folie, welche den mindestens einen kapazitiven Sensor sowie elektrische Leiterbahnen aufweist; und (c) eine strukturierte Lichtleiterschicht; wobei das Kunststoffbauteil erhältlich ist durch Verbinden einer selbstklebenden Anzeigedisplayfolie mit der berührungsempfindlichen Folie und ein anschließendes Hinterspritzen der strukturierten Lichtleiterschicht.

Die WO 2012/175523 A1 beschreibt eine Bedien- und Anzeigeeinrichtung für ein Haushaltsgerät, wobei kapazitive Sensorelektroden in Überlappung mit der berührungsempfindlichen Betätigungsfläche angeordnet sind und zumindest einem Teil von Funktionszeichen, denen ein Wert eines Parameters eines Betriebsprozesses des Haushaltsgerätes zugeordnet sind, jeweils eine separate kapazitive Sensorelektrode zugeordnet ist, welche in Überlappung mit dem ihr zugeordneten Funktionszeichen angeordnet ist, so dass durch Berührung der Betätigungsfläche in einem Überlappungsbereich mit einer der Sensorelektroden eine Kapazität eines diese Sensorelektrode aufweisenden Berührungskondensators veränderbar ist.

Die DE 10 2010 060 295 A1 beschreibt ein programmgesteuertes Haushaltsgerät mit einer Bedien- und Anzeigevorrichtung (Interface), die eine berührungsempfindliche Anzeigefläche (Touchscreen) aufweist, in der Programme und Programmparameter anzeigbar und mittels Berührung entsprechender Bedien- und Anzeigefelder durch einen Benutzer auswählbar und/oder veränderbar sind, mit einer Anzeigefläche mit einer sich über ihre Breite erstreckenden Bedien- und Anzeigeleiste (Statusleiste) für die Anzeige und Auswahl von Statusinformationen in nebeneinander liegenden Bedien- und Anzeigefeldern; einem sich unterhalb der Statusleiste erstreckenden Bedien- und Anzeigefeld (Arbeitsbereich), für die Anzeige von Programmen, Programmparametern und Programminformationen und für die Auswahl und Veränderung (Bedienhandlungen) von Programmen, Programmparametern, wobei innerhalb des Arbeitsbereiches Bedien- und Anzeigefelder variabel nebeneinander und/oder übereinander anzeigbar sind; und einer sich unterhalb des Arbeitsbereichs erstreckenden Bedien- und Anzeigeleiste (Navigationsleiste), in der nebeneinander Bedien- und Anzeigefelder für die Auswahl, Bestätigung bzw. das Löschen von Bedienhandlungen innerhalb des Arbeitsbereichs anzeigbar sind.

Die DE 103 07 756 A1 beschreibt ein Verfahren und eine Bedienvorrichtung zum Einstellen eines programmierbaren Haushaltsgerätes insbesondere zum Erstellen von Betriebsprogrammen bspw. für Waschmaschinen, Waschtrockner, Trockner, Elektroherde und Geschirrspüler, wobei die vom Nutzer bei der Programm- und Parameterauswahl vorzunehmenden Schaltvorgänge im Wesentlichen über ein Bedienelement erfolgen und die während des Programmiervorgangs sowie während des Programmdurchlaufs und nach Programmende für den Nutzer bestimmten Informationen über ein Anzeigeelement ausgegeben werden.

Die DE 100 35 642 C1 beschreibt ein Wäschebehandlungsgerät wie Waschmaschine, Waschtrockner oder Trockner mit einer Programmsteuereinrichtung und einer Bedienoberfläche zur cursorunterstützten Benutzerführung bei der Programmauswahl und Programmgestaltung mit einer Anzeigeeinrichtung für Programminformationen und mit einer Bedieneinrichtung mit Programmfunktionstasten sowie mit einem Multifunktions-Drehwahlschalter mit Auswahlfunktion über die in der Anzeigeeinrichtung im Klartext darstellbare Betriebsprogramme sowie Programmparameter wählbar sind, wobei die Anzeigeeinrichtung als frei definierbares grafikfähiges Anzeige-Display zur cursorunterstützten Navigation mittels der Bedieneinrichtung durch hierarchisch strukturierte Anzeigeebenen mit Dialogfenstern und Anzeigefenstern unterschiedlicher Anzeigeformate ausgebildet ist, wobei die Bedieneinrichtung in Abhängigkeit der Anzeigeebene zum gleichwertigen und/oder kontextbezogenen Zugriff auf die Anzeigeinhalte der Dialogfenster und Anzeigefenster über den Multifunktions-Drehwahlschalter oder die Programmfunktionstasten ausgebildet ist und in den Dialogfenstern über die Programmfunktionstasten und/oder den Multifunktions-Drehwahlschalter der Bedieneinrichtung Betriebsprogramme sowie Programmparameter benutzergeführt auswählbar oder definierbar sind und in den Anzeigefenstern Programminformationen darstellbar sind. Dabei ist ein ausgewähltes oder definiertes Betriebsprogramm mit einer der Bedieneinrichtung separat zugeordneten Programm-Starttaste in Betrieb zu setzen.

Die WO 2014/124105 A2 beschreibt ein Wäschebehandlungsgerät, umfassend: eine Kontrolleinrichtung, welche konfiguriert ist, um den Betrieb wenigstens einer operativen Komponente zugehörig zum Wäschebehandlungsgerät zu steuern; und ein Touchscreen-Benutzerinterface, welches mit der Kontrolleinrichtung kommuniziert, wobei die Kontrolleinrichtung auf wenigstens eine Benutzerauswahl über das Touchscreen-Benutzerinterface reagiert, um den Betrieb der wenigstens einen operativen Komponente zu steuern, wobei das Touchscreen-Benutzerinterface einen Anzeigebildschirm aufweist, um eine Reihe von Waschprogrammsymbolen anzuzeigen, wobei jedes Waschprogrammsymbol einem entsprechenden Waschprogramm zugeordnet ist, welches durch die Kontrolleinrichtung umgesetzt werden kann. Die Reihe von Waschprogrammsymbolen ist über den Anzeigebildschirm scrollbar in entgegengesetzten ersten und zweiten Scrollrichtungen, wobei jedes Waschprogrammsymbol individuell wählbar ist als wenigstens eine Benutzerauswahl über eine Benutzer-Berührungsinteraktion mit dem Touchscreen-Benutzerinterface, und ein ausgewähltes der dargestellten Waschprogrammsymbole zentriert und vergrößert wird innerhalb wenigstens eines Teils der Reihe von Waschprogrammsymbolen, um die Auswahl des einen ausgewählten der dargestellten Waschprogrammsymbole anzuzeigen.

Allerdings kann die Steuerung eines Haushaltsgeräts über einen Touchscreen dann sehr schwierig sein, wenn die Anzahl von ausführbaren Programmen und Einstellmöglichkeiten von Parametern sehr groß sind. Dies ist insbesondere bei Haushaltsgeräten zur Behandlung von Gegenständen wie Wäsche, Geschirr und Lebensmitteln der Fall. Bei einer komplexen Hierarchie von Programmen und Einstellmöglichkeiten kann ein Benutzer des Haushaltsgerätes sehr leicht verwirrt werden und den Überblick über die Steuerung verlieren. Dies ist insbesondere der Fall, wenn für bestimmte Programmschritte auch noch viele einzelne Einstellmöglichkeiten gegeben sind. Aber gerade die Möglichkeit der Eingabe von optimalen Einstellungen kann einen sehr effizienten und komfortablen Betrieb eines Haushaltsgeräts ermöglichen. Neben einem im Hinblick auf den Verbrauch an Energie und Einsatzmaterialien wie Wasser, Reinigungsmittel, etc. effizienteren Betrieb des Haushaltsgerätes kann der Betrieb auch besonders benutzerfreundlich gestaltet werden, wenn die Eingabe von optimalen Einstellungen möglich ist.

Die Größe des Touchscreens begrenzt jedoch den Bereich von Bewegungen, welcher für die Einstellung von Parametern benutzt werden kann, und begrenzt auch die Anzahl der Parameter, die durch Verwendung eines Touchscreens eingestellt werden können. Dieses erfordert häufig eine tiefe Hierarchie von Menüs und Fenstern für die Zwecke der Einstellung von Parametern, die für ein im Haushaltsgerät durchzuführendes Programm verwendet werden sollen. Damit verzögert sich jedoch die Steuerung eines Programms oder aber es werden von einem vielleicht nicht sehr geduldigen Benutzer nicht optimierte Verfahrensweisen vorgegeben, so dass der Betrieb des Haushaltsgerätes nicht optimal erfolgt. Eine verbesserte und auf die Ausnutzung des gesamten Programm- und Optionsportfolios ausgelegte, erleichterte Bedienung von Haushaltsgeräten ist daher wünschenswert.

Die EP 2 883 990 A1 beschreibt eine Waschmaschine-Kontrolldisplay-Vorrichtung sowie eine damit ausgestattete Waschmaschine. Die Waschmaschine-Kontrolldisplay-Vorrichtung umfasst ein Touchpanel mit einem Flüssigkristallpanel zur Anzeige einer Auswahltaste für einen Betriebsweg zur Bestimmung von Betriebsbedingungen für das Waschen und Trocknen, und zum Einstellen von Bedingungen für das Waschen, Spülen und Schleudern; und einem transparenten Panel, beinhaltend eine transparente Elektrode, wobei das transparente Panel dem Flüssigkristallpanel überlagert ist und das Touchpanel zur Durchführung des Betriebes durch Berührung mit einem Finger auf das transparente Panel eingerichtet ist und ausgestattet ist mit einem Beschreibungsdisplay-Bildschirm zur Beschreibung von Details des Betriebsweges. Der Beschreibungsdisplay-Bildschirm ist ausgestattet mit einem Betriebsweg-Einstellschalter, damit das Flüssigkristallpanel die Einstellbedingungen und die Einstellschalter darstellt.

Die FIG. 7A bis FIG 7F illustrieren Bildschirmdarstellungen, wobei ein Benutzer einen Bildschirm oder Einstellungen durch Berühren mit einem Finger ändert. FIG. 7A zeigt dabei einen ersten Bildschirm, wenn das Gerät eingeschaltet worden ist, mit Einstellschaltern u.a. für die Auswahl eines Wasch- und/oder Trocknungsmodus. Wird ein Einstellschalter berührt, erfolgt ein Wechsel zum Bildschirm von FIG. 7B, auf dem beispielsweise auf einem Bedienelement eine voreingestellte Dauer eines Waschschrittes angegeben ist. Wird dieses Bedienelement betätigt, erscheint der Bildschirm von FIG. 7C, auf welchem anhand eines darin angezeigten länglichen Sensorelementes ein Benutzer durch Sliden einen gewünschten Temperaturwert einstellen kann.

Vor diesem Hintergrund war es Aufgabe der vorliegenden Erfindung, ein Haushaltsgerät zur Behandlung von Gegenständen mit einer verbesserten Bedienbarkeit bereitzustellen. Vorzugsweise soll dabei ebenfalls die Sicherheit beim Betrieb des Haushaltsgeräts verbessert werden. Außerdem soll ein Verfahren zum Betrieb dieses Haushaltsgeräts bereitgestellt werden.

Die Lösung dieser Aufgabe wird nach dieser Erfindung erreicht durch ein Haushaltsgerät zur Behandlung von Gegenständen (im Folgenden auch mit "Haushaltsgerät" abgekürzt) sowie ein zu dessen Betrieb geeignetes Verfahren mit den Merkmalen der entsprechenden unabhängigen Patentansprüche. Bevorzugte Ausführungsformen des erfindungsgemäßen Haushaltsgeräts sowie des erfindungsgemäßen Verfahrens sind in den jeweiligen abhängigen Patentansprüchen aufgeführt. Bevorzugten Ausführungsformen des erfindungsgemäßen Haushaltsgeräts entsprechen bevorzugte Ausführungsformen des erfindungsgemäßen Verfahrens und umgekehrt, auch wenn dies hierin nicht explizit festgestellt ist.

Gegenstand der Erfindung ist somit ein Haushaltsgerät zur Behandlung von Gegenständen, aufweisend eine Steuereinrichtung und eine als externer oder interner Touchscreen ausgestaltete Bedieneinrichtung, wobei die Steuereinrichtung eingerichtet ist, um auf dem Touchscreen auf mindestens zwei Bildschirmanzeigen B1, B2 unterschiedlicher Hierarchie erste und zweite einstellbare Steuergrößen des Haushaltsgeräts als voneinander abgegrenzte, flächige, berührungsempfindliche Bedienelemente darzustellen, wobei erste einstellbare Steuergrößen Behandlungsprogramme für die Gegenstände sind und zweite Steuergrößen den Behandlungsprogrammen zugeordnete Programmparameter mit veränderbaren Parameterwerten sind, wobei auf einer hierarchisch höheren Bildschirmanzeige B1 mit einer Hierarchie H1 erste Bedienelemente angezeigt sind, welche Behandlungsprogrammen zugeordnet sind, die durch Berührung eines zugeordneten ersten Bedienelementes ausgewählt werden, und auf mindestens einer hierarchisch niedrigeren Bildschirmanzeige B2 mit einer Hierarchie H2 < H1 zweite Bedienelemente angezeigt sind, welche die Einstellung der Programmparameter ermöglichen, wobei der hierarchisch höheren Bildschirmanzeige B1 die hierarchisch niedrigere Bildschirmanzeige B2 mittelbar oder unmittelbar folgt, wenn ein erstes Bedienelement durch Berühren ausgewählt wird, und zumindest ein Teil der zweiten Bedienelemente längliche Sensorelemente aufweist, in deren Längsrichtung sich ein zugeordneter Parameterwert kontinuierlich oder sprunghaft ändert, so dass der Parameterwert durch Berührung des länglichen Sensorelementes eingestellt werden kann, und die Steuereinrichtung derart eingerichtet ist, dass durch Berührung eines ersten Bedienelementes zwischen den Bildschirmanzeigen B1 und B2 eine Bildschirmanzeige B3 erfolgt, auf der mindestens einige der Programmparameter und deren unveränderbare oder veränderbare Parameterwerte auf dritten Bedienelementen angezeigt sind, wobei bei Berührung eines dritten Bedienelementes, das einem veränderbaren Parameterwert zugeordnet ist, unmittelbar oder mittelbar die Bildschirmanzeige B2 erfolgt, und außerdem die Steuereinrichtung ausgestaltet ist, um auf der Bildschirmanzeige B1 den unmittelbaren Start eines Behandlungsprogrammes zu ermöglichen, indem ein hierfür vorgesehener Teilbereich eines ersten Bedienelementes berührt wird.

"Hierarchie" im Sinne der Erfindung bedeutet insbesondere die Reihenfolge der Anordnung von Bildschirmanzeigen. Beispielsweise wird zunächst eine Bildschirmanzeige mit einer höheren Hierarchie dargestellt. Das Berühren von Bedienelementen auf einer Bildschirmanzeige mit einer höheren Hierarchie führt dann zur Darstellung (auch als "Öffnung" bezeichenbar) einer Bildschirmanzeige mit einer niederen Hierarchie. Bildschirmanzeigen können einander unmittelbar folgen, d.h. ohne dass eine weitere Bildschirmanzeige zwischengeschaltet ist, oder mittelbar, d.h. mit einer oder mehreren zwischengeschalten Bildschirmanzeigen.

Der Begriff "Berührung" ist breit auszulegen, indem er jegliche Berührungen mit einer externen Eingabeeinheit umfasst, die in ein elektrisches Signal, auch als "Berührsignal" bezeichenbar, umgewandelt werden können. Erfindungsgemäß kann eine externe Eingabeeinheit beispielsweise der Finger eines Benutzers sein und/oder auch ein Stift. Entsprechend kann eine Berührung ganz allgemein mit einer Eingabeeinheit vorgenommen werden. Die externe Eingabeeinheit dient dazu, Berührungssignale auf dem Touchscreen zu erzeugen, wobei Berührungssignale in der Regel Bewegungen wie z.B. Drücken, Ziehen, Wischen und/oder Drehen umfassen.

Der Begriff "Behandlungsprogramme" ist breit auszulegen. Erfindungsgemäß umfassen Behandlungsprogramme Programme, welche standardmäßig in einem Haushaltsgerät durchgeführt werden können, deren Parameter vorab in der Steuereinrichtung als Default-Werte hinterlegt werden, sogenannte Standard-Behandlungsprogramme, sowie Behandlungsprogramme mit Zusatzoptionen, d.h. mit gegenüber Standardeinstellungen durch einen Benutzer abgeänderten Programmparametern. Zusatzoptionen können Vorgaben wie etwa ein verzögerter Start, ein auf die Erfüllung sonstiger Vorgaben wie Schnelligkeit ausgelegter Programmablauf, in einer Waschmaschine z.B. ein möglichst rasch ablaufendes Waschprogramm, oder ein auf Energieeffizienz ausgelegtes Waschprogramm, ein Hygieneschritt oder beispielsweise auch ein an eine individuelle Verschmutzung angepasstes Waschprogramm, wie etwa bei Blaubeer- oder Rotweinflecken.

In einer Ausführungsform des erfindungsgemäßen Haushaltsgeräts ist es überdies bevorzugt, dass in der Steuereinrichtung Abhängigkeiten zwischen Programmparametern und/oder Zusatzoptionen hinterlegt sind, welche eine unvorteilhafte oder gar zu einem Schaden führende Eingabe an Kombinationen von Parameterwerten für verschiedene Parameter oder sonstige Eingaben durch einen Benutzer verhindert. Die nicht wählbaren Parameterwerte sind dann auf dem Touchscreen vorzugsweise optisch zurückgesetzt dargestellt und die Auswählbarkeit durch die Steuereinrichtung blockiert.

Zu den Steuergrößen können auch "Betriebszustände" gehören, wobei der Begriff "Betriebszustände" breit auszulegen ist. So umfasst der Begriff "Betriebszustände" sowohl das Ergebnis eines Einschalt- oder Ausschaltvorganges und einen Stand-By-Modus des Haushaltsgeräts als auch unterschiedliche Stufen eines durchgeführten Behandlungsprogramms und/oder einen Sonderbetriebszustand. Als Sonderbetriebszustand gilt erfindungsgemäß insbesondere ein Betriebszustand, welcher von einer Fehlfunktion des Haushaltsgeräts herrührt, beispielsweise ein Ausfall einer Laugenpumpe in einer Waschmaschine und/oder ein defektes Frischwasserzulaufventil. Ein Sonderbetriebszustand wird in Abhängigkeit von der Art eines Haushaltsgerätes festgelegt, beispielsweise kann es sich um einen nicht ordnungsgemäßen Betrieb des Haushaltsgerätes handeln, z.B. übermäßige Schaumerzeugung in einem wasserführenden Haushaltsgerät oder zu hohe Temperaturen in einem Gargerät.

Die Darstellung von Steuergrößen auf dem Touchscreen wird erfindungsgemäß im Allgemeinen realisiert durch eine Darstellung von Bedienelementen in Form von Text, umfassend Buchstaben, Zahlen und Sonderzeichen, und/oder Bild. Vorteilhaft ist auch eine Darstellung in Form einer Animation. Der Begriff "Animation" ist hierin weit gefasst und nicht näher eingeschränkt. Er umfasst erfindungsgemäß alle Arten dynamischer Darstellungen, beispielsweise einfache Blinksequenzen, sich bewegende Muster, Bilder und/oder Texte, aber beispielsweise auch Videosequenzen.

In Ausführungsformen des erfindungsgemäßen Haushaltsgeräts kann z.B. für den Fall einer Waschmaschine ein vorgegebenes Standardprogramm zum Waschen von Baumwollwäschestücken sowohl durch den Begriff Baumwolle als auch durch ein Bild einer Baumwollpflanze für einen Benutzer auf dem Touchscreen dargestellt werden. Aber auch die Darstellung einer Kombination des Begriffs Baumwolle mit dem Bild einer Baumwollpflanze ist möglich. Möglich ist auch die Darstellung der Baumwollpflanze als Animation, also beispielsweise eine sich drehende Baumwollpflanze. Ebenso kann bevorzugt beispielsweise in einer Waschmaschine oder einem Trockner eine Temperatur durch das Wort Temperatur und/oder ein Thermometer und/oder die Einheit "°C" dargestellt sein. Es ist ebenfalls möglich, dass das Thermometer als Animation dargestellt ist, beispielsweise, indem die Temperatur als alternierend steigend und fallend dargestellt wird. Insbesondere lange und/oder sperrige Begriffe können erfindungsgemäß bevorzugt durch Bilder dargestellt sein, wie beispielsweise "Startzeitverzögerung" durch eine Uhr oder "ökologisch" durch ein Blatt, "Energieeffizienz" durch einen Stecker oder "Zubereiten von Speisen" durch ein Besteck.

In weiteren Ausführungsformen des erfindungsgemäßen Haushaltsgeräts können beispielsweise auch Betriebszustände durch Text, Bild und/oder eine Animation für einen Benutzer auf dem Touchscreen dargestellt sein. Insbesondere ist dabei die unterschiedliche Darstellung von Betriebszuständen, wie beispielsweise Programmfortschritten bevorzugt. So kann z.B. eine Waschphase eines Waschprogramms anders dargestellt sein als eine Schleuder- oder Spülphase. Insbesondere bevorzugt ist die Darstellung von Programmfortschritten in Form einer Animation. Denkbar ist, dass unterschiedliche Programmfortschritte beispielsweis durch unterschiedliche Bewegungsformen dargestellt werden können. Beispielsweise kann das Muster ein Wellenmuster sein, welches sich hin und her bewegt, wenn z.B. in einem als Waschmaschine ausgeführten wasserführenden Haushaltsgerät ein Waschprogramm eine Waschphase durchläuft. Das Wellenmuster kann drehend dargestellt sein, wenn die Waschmaschine schleudert und horizontal über den Touchscreen wandern, wenn das Waschprogramm in der Spülphase ist.

Möglich ist insbesondere auch, dass unterschiedliche Programmfortschritte durch unterschiedliche Animationsgeschwindigkeiten dargestellt sind, insbesondere unterschiedliche Trommeldrehzahlen können auf diese Weise vorteilhaft visualisiert werden, indem sich die Animationsgeschwindigkeit entsprechend der Trommeldrehzahl verändert, bevorzugt mit steigender Drehzahl zunimmt.

In einer weiteren Ausführungsform des erfindungsgemäßen Haushaltsgeräts können einzelne Programmfortschritte beispielsweise aber auch durch die Einspielung unterschiedlicher Videosequenzen differenziert dargestellt werden. Eine visuelle Differenzierung von Programmschritten bietet dabei im Allgemeinen für einen Benutzer den Vorteil, dass ein Programmfortschritt auch aus weiterer Entfernung vom Haushaltsgerät leicht identifiziert werden kann und somit eine schnelle und sichere Überwachung des Betriebs des Haushaltsgeräts ermöglicht wird.

In einer besonders bevorzugten Ausführungsform des erfindungsgemäßen Haushaltsgeräts können überdies auch Sonderbetriebszustände des Haushaltsgeräts über den Touchscreen an einen Benutzer ausgegeben werden. Die Anzeige kann dabei in Text, Bild und/oder Animation erfolgen. Die Steuereinrichtung ist dabei so eingerichtet, dass bei Vorliegen eines Sonderbetriebszustands eine Information über die Art des Sonderbetriebszustands und/oder eine Warnung an einen Benutzer ausgegeben werden. Die Information und/oder Warnung kann dabei in einer einfachen Ausführungsform als Text auf dem Touchscreen erscheinen, beispielsweise Wasserzulauf defekt. Es kann sich dabei aber auch um eine Bilddarstellung handeln und/oder eine Animation. So könnten beispielsweise Text und/oder Bild dauerhaft mit einer bestimmten Frequenz blinken, es könnte aber auch eine Videosequenz gezeigt werden, die eine Alarmsituation vermittelt. Auf diese Weise kann ein Sonderbetriebszustand leicht und intuitiv von einem Benutzer, auch aus einer Entfernung vom Haushaltsgerät, erkannt werden, womit eine verbesserte Betriebssicherheit ermöglicht wird.

In einer weiteren bevorzugten Ausführungsform des erfindungsgemäßen Haushaltsgeräts können auch ein Einschaltvorgang, ein Abschaltvorgang und/oder ein Stand-By-Modus des Haushaltsgeräts in Form von Text, Bild und/oder Animation an einen Benutzer über den Touchscreen ausgegeben werden. So kann z.B. die Wendung "Guten Tag" beim Einschaltvorgang erscheinen, die Wendung "Auf Wiedersehen" beim Abschaltvorgang und/oder die Wendung "Pause" im Stand-By Modus. Die Anzeige kann z.B. aber auch in einer Bilddarstellung ausgeführt sein. So kann das Firmenlogo beim Einschaltvorgang erscheinen und/oder beim Abschaltvorgang verschwinden. Es ist auch möglich, dass Videosequenzen gezeigt werden, welche einem Benutzer z.B. eine Begrüßung, eine Verabschiedung und/oder eine Stand-By-Situation vermitteln.

Die Art der Darstellung ist erfindungsgemäß nicht eingeschränkt. Sie kann in schwarzweiß erfolgen, in Graustufen und/oder farbig. Insbesondere kann die Darstellung dabei bevorzugt auch eine Farblogik besitzen. So können beispielsweise durch einen Benutzer ausgewählte Bedienelemente, d.h. insbesondere Behandlungsprogramme, Programmparameter und Parameterwerte hell und/oder mit einer ersten Farbe hervorgehoben dargestellt werden und nicht ausgewählte und/oder nicht auswählbare Behandlungsprogramme, Programmparameter und Parameterwerte dunkel und/oder mit einer zweiten Farbe zurückgesetzt dargestellt werden. Auf diese Weise wird eine verbesserte Übersicht bereitgestellt und es ist einem Benutzer leicht möglich, eine bereits getätigte Auswahl leicht nachzuvollziehen.

Die Art der Bilder und Animationen zur Darstellung von Steuergrößen ist erfindungsgemäß nicht eingeschränkt. Es kann sich beispielsweise um abstrakte und/oder realistische Darstellungen handeln, welche kontextbezogen sein können, also beispielsweise auf ein bestimmtes Behandlungsprogramm, einen bestimmten Betriebszustand und/oder einen bestimmten Programmparameter. Sie können aber auch kontextfern sein, also beispielsweise lediglich zu einer Differenzierung dienen. Möglich ist auch eine benutzerspezifische Darstellung und/oder Farbwahl. In einer Ausführungsform des erfindungsgemäßen Haushaltsgeräts sind dazu in der Steuereinrichtung Darstellungspakete mit unterschiedlichen Layouts für den Touchscreen hinterlegt, welche von einem Benutzer je nach Vorliebe gewählt werden können.

Ein solches Darstellungspaket für den Touchscreen umfasst beispielsweise die Farben Schwarz, Weiß und Blau, sowie unterschiedliche Graustufen. Der Touchscreen-Hintergrund für eine Übersichtsdarstellung kann beispielsweise schwarz sein und für eine Fläche, in welcher eine Einstellung stattfindet, beispielsweise eine Temperatureinstellung, weiß. Texte können, abhängig von der Priorität, in Weiß und/oder Schwarz hervorgehoben und/oder in Grau zurückgesetzt dargestellt sein. So können z.B. Programmbezeichnungen, wie Baumwolle und/oder Sport, sowie bereits ausgewählte Betriebsfunktionen in Weiß und/oder Schwarz dargestellt sein und nicht ausgewählte und/oder nicht auswählbare in Grau. Bilddarstellungen und Animationen können ebenfalls in Blau und/oder in Weiß dargestellt sein. So kann z.B., unterstützend zum Text Baumwolle, ein Bild einer Baumwollpflanze in Blau gezeigt werden.

In einer weiteren bevorzugten Ausführungsform ist die Steuereinrichtung jedenfalls dazu eingerichtet, dass die Durchführung eines Behandlungsprogrammes und/oder der Übergang zwischen zwei Programmschritten durch akustische und/oder optische Signale angezeigt wird.

So weist ein erfindungsgemäß bevorzugtes Haushaltsgerät einen Soundgenerator und einen Lautsprecher zur Erzeugung und Wiedergabe von im Zusammenhang mit den Behandlungsprogrammen stehenden akustischen Signalen auf. Überdies kann auf einem Touchscreen durch einen Klang in Kombination mit einer Berührung ein akustischer Eindruck, z.B. das Drücken einer Taste, vermittelt werden.

Die Art, die Ausgestaltung des Lautsprechers sowie dessen Anbringungsort sind dabei erfindungsgemäß nicht eingeschränkt. Er kann für einen Benutzer sichtbar angebracht oder aber für einen Benutzer unsichtbar in das Haushaltsgerät integriert sein. In der Steuereinrichtung des Haushaltsgeräts sind zudem mindestens ein Klang und/oder Klangsequenzen hinterlegt, welche einem Berührungssignal und/oder einem Betriebszustand wie z.B. einem durchgeführten Programm, einem Ein-/Ausschaltvorgang oder einem Übergang zwischen zwei Programmschritten zugeordnet sind. So kann z.B. bei einer durch einen Benutzer erfolgten Berührung eines Bedienelementes gleichzeitig ein Klang durch die Steuereinrichtung ausgegeben werden, welcher den Eindruck des Drückens einer Taste vermittelt. Ebenso kann z.B. dem Wechsel von einer Bildschirmdarstellung B1 zu einer Bildschirmdarstellung B2 und/oder B3 ein bestimmter Klang zugeordnet sein. Insbesondere ist es in einer weiteren Ausführungsform des erfindungsgemäßen Haushaltsgeräts bevorzugt, dass in der Steuereinrichtung zudem Klangsequenzen einem Berührungssignal und/oder einem Betriebszustand wie z.B. einem durchgeführten Programm, einem Ein-/Ausschaltvorgang oder einem Übergang zwischen zwei Programmschritten zugeordnet sind. So können beispielsweise ein Einschaltvorgang und/oder ein Ausschaltvorgang einem Benutzer durch einen zugeordneten Klang und/oder eine Klangsequenz akustisch vermittelt werden. Insbesondere bevorzugt ist auch die akustische Vermittlung eines Sonderbetriebszustands an einen Benutzer, z.B. durch ein Warnsignal. Auf diese Weise kann ein Benutzer über das Vorliegen eines Sonderbetriebszustands informiert werden, auch wenn er sich nicht im Aufstellraum des Haushaltsgeräts befindet. Ebenso kann aber auch der Wechsel zwischen einzelnen Programmschritten akustisch durch einen Klang und/oder eine Klangsequenz vermittelt werden. Auch hier kann ein Benutzer somit den Betrieb eines Haushaltsgeräts überwachen, auch wenn er sich nicht im Aufstellraum des Haushaltsgeräts befindet.

Es ist erfindungsgemäß insbesondere bevorzugt, dass die Durchführung eines Behandlungsprogrammes auf dem Touchscreen durch eine sich zeitlich ändernde Bilddarstellung, insbesondere eine Animation, angezeigt wird, wobei in der Steuereinrichtung eine Zuordnung zwischen den Behandlungsprogrammen und den sich ändernden Bilddarstellungen hinterlegt ist.

Vorzugsweise ist die Steuereinrichtung derart ausgestaltet, dass eine Frequenz und/oder Intensität der akustischen und/oder optischen Signale von der Art eines durchgeführten Programmschrittes und/oder eines Überganges zwischen zwei Programmschritten abhängt, wobei in der Steuereinrichtung ein Zusammenhang zwischen der Frequenz und/oder Intensität der akustischen und/oder optischen Signale und der Art eines durchgeführten Programmschrittes und/oder eines Überganges zwischen zwei Programmschritten hinterlegt ist.

In bevorzugten Ausführungsformen der Erfindung ist der Touchscreen eingerichtet, um bei Berührung einen haptischen Effekt zu vermitteln. Dies kann beispielsweise durch Vibration in Kombination mit einem Berührungssignal und/oder einer geeigneten Oberflächenmodifikation erreicht werden, z.B. über Vertiefungen wie Rillen oder runde Vertiefungen, welche an die Größe eines Fingers angepasst sind, kann ein haptischer Eindruck vermittelt werden. Art und Intensität des haptischen Effektes können dabei in Abhängigkeit von einem einer Eingabefläche zugeordneten Behandlungsprogramm, Programmparameter und Parameterwert abhängen. Da außerdem in Ausführungsformen der Erfindung weitere Eingabeflächen vorgesehen sein können, z.B. ein Ein-Aus-Schalter, können auch diesen spezielle haptische Eigenschaften zugeordnet sein.

In einer bevorzugten Ausführungsform des erfindungsgemäßen Haushaltsgeräts kann die Bedieneinrichtung des Haushaltsgeräts daher zusätzlich eingerichtet sein, Vibrationen zu erzeugen. In der Steuereinrichtung sind dann beispielsweise ein Vibrationssignal oder Vibrationsabfolgen hinterlegt, welche bestimmten Berührungen zugeordnet sind. So kann z.B. bei einem Berührungssignal in Form eines Berührens oder Drückens auf den Touchscreen die Steuereinrichtung eine Vibration initiieren, die einem Benutzer den Eindruck eines Tastendrucks vermittelt.

In einer bevorzugten Ausführungsform des Haushaltsgeräts sind auch Kombinationen aus einer optischen, akustischen und haptischen Darstellung von Behandlungsprogrammen, Programmparametern und Parameterwerten durch den Touchscreen möglich.

Erfindungsgemäß folgt der hierarchisch höheren Bildschirmanzeige B1 die hierarchisch niedrigere Bildschirmanzeige B2 mittelbar oder unmittelbar, wenn ein erstes Bedienelement durch Berühren ausgewählt wird, und zumindest ein Teil der zweiten Bedienelemente längliche Sensorelemente aufweist, in deren Längsrichtung sich ein zugeordneter Parameterwert kontinuierlich oder sprunghaft ändert, so dass der Parameterwert durch Berührung des länglichen Sensorelementes eingestellt werden kann. Hierbei sind prinzipiell zwei Möglichkeiten für die Benutzung vorhanden. So kann bei einer ersten Möglichkeit ein im Wesentlichen örtlich festes Berühren mit einer Bedieneinheit, insbesondere mit einem Finger, also gerade keine ziehende oder seitlich ablaufen Bewegung, als punktartige Berührung ausgewertet werden. Dem Ort der punktartigen Betätigung ist dann im Allgemeinen ein bestimmter Parameterwert zugeordnet, welcher dadurch eingestellt wird. Bei der zweiten Möglichkeit ist vorgesehen, dass zur Betätigung ein Finger aufgelegt wird und vor allem in einer ziehenden Bewegung entlang des länglichen Sensorelementes bewegt wird. Diese Betätigung geht also über eine punktartige Berührung hinaus. In Abhängigkeit von der Länge und/oder dem Anfangspunkt und Endpunkt der Betätigung bzw. der ziehenden länglichen Bewegung wird ein entsprechender Parameterwert eingestellt. Das längliche Sensorelement kann insbesondere ein segmentierter, durch eine Berührung verschiebbarer Slider sein, wobei die Segmente als solche einem Benutzer sichtbar sein können oder aber kontinuierlich aufeinander folgen.

In einem konkreten Beispiel kann ein Slider beispielsweise blau erscheinen, wenn ein Wert gewählt wird, z.B. eine Temperatur von 60°C, und weiß erscheinen, wenn ein Grenzwert eines Parameters gewählt wird, z.B. "Kalt". Auf diese Weise können alle Eingaben mit einer höheren Priorität für einen Benutzer in starken Farben dargestellt werden und alle Betriebsfunktionen mit geringer Priorität für einen Benutzer in reduzierten Farben. Durch eine solche Farblogik kann die Komplexität der Informationen, welche auf dem Touchscreen dargestellt sind, reduziert und die Bedienung durch einen Benutzer erleichtert werden. Zudem kann die Sicherheit bei einer Auswahl an Behandlungsprogrammen, Programmparametern und Parameterwerten erhöht werden, da sich ausgewählte von nicht ausgewählten und/oder nicht auswählbaren optisch unterscheiden.

Im Allgemeinen ist die Anzahl an Behandlungsprogrammen und Parameterwerten, insbesondere in einem wasserführenden Haushaltsgerät, groß. In der Regel begrenzt eine als Touchscreen ausgelegte Bedieneinrichtung den Bereich, in welchem Behandlungsprogramme und Parameterwerte übersichtlich dargestellt werden können. Erfindungsgemäß weist der Touchscreen daher mindestens zwei Bildschirmanzeigen, vorzugsweise mehr als zwei Bildschirmanzeigen auf. Im Allgemeinen wird die Anzahl an Bildschirmanzeigen bestimmt sein durch die Art des Haushaltsgeräts und die in ihm bereitgestellten Steuergrößen. So wird beispielsweise in einer einfacheren und günstigeren Variante des Haushaltsgeräts die Anzahl an Bildschirmanzeigen im Allgemeinen geringer sein, da weniger Steuergrößen vorgegeben sind. In einem vergleichsweise teuren Haushaltsgerät mit einer Vielzahl an Betriebsfunktionen wird dagegen die Anzahl an Bildschirmanzeigen höher sein, da mehr Steuergrößen dargestellt werden müssen.

Im Allgemeinen kann ein Wechsel von einer Bildschirmanzeige zu einer zweiten Bildschirmanzeige und/oder ein Navigieren innerhalb einer Bildschirmanzeige kontinuierlich und/oder sprunghaft erfolgen.

Die Ausgestaltung der Bedienelemente innerhalb eines Bildschirms zur Unterteilung des Touchscreens ist erfindungsgemäß nicht eingeschränkt. Sie richtet sich im Allgemeinen nach den darzustellenden Behandlungsprogrammen und Programmparametern, einer angebotenen Möglichkeit zum sofortigen Programmstart und/oder zur Eingabe von Parametern, beispielsweise über einen durch Berühren und Öffnen einer weiteren Bildschirmanzeige. So wird beispielsweise eine Darstellung von Standardprogrammen in der Regel in Form einer Liste mit gleichmäßig verteilten Flächenabschnitten dargestellt sein. Bei der näheren Bestimmung eines durch einen Benutzer ausgewählten Behandlungsprogrammes bzw. Programmparameters, wie etwa der Einstellung einer Temperatur, wird die Flächenaufteilung vorzugsweise zugunsten dieses Behandlungsprogrammes bzw. Programmparameters gewichtet sein. D.h., dem Bedienelement bzw. der ihm zugeordneten Fläche, in welchem z.B. die Temperatur und deren Einstellmöglichkeiten dargestellt sind, wird im Allgemeinen prozentual der größte Anteil zukommen, um eine größtmögliche Übersichtlichkeit und leichte Bedienung für einen Benutzer zu ermöglichen. Entsprechend sind gleichzeitig andere, nicht ausgewählte Betriebsfunktionen in einem kleineren Flächenanteil dargestellt und/oder ausgeblendet.

Die Form eines Bedienelementes innerhalb einer Bildschirmanzeige ist erfindungsgemäß nicht eingeschränkt. Ein Bedienelement kann beispielsweise rechteckig oder rund sein, aber auch komplexere Formen annehmen.

Im Allgemeinen kann ein Benutzer durch Berührungen auf dem Touchscreen Behandlungsprogramme und Programmparameter auswählen und/oder benutzerdefiniert einstellen. In einer bevorzugten Ausführungsform des erfindungsgemäßen Haushaltsgeräts weist die Steuereinrichtung daher einen Datenspeicher auf, in welchem benutzerdefinierte Einstellungen gespeichert und zur erneuten Durchführung im Haushaltsgerät auch wieder abgerufen werden können. Ein Benutzer kann hierzu beispielsweise nach erfolgter Einstellung ein Bedienelement mit einem Bild in Form eines Sterns und/oder eines Speichermediums berühren, welche die Funktion "Unter Favoriten Speichern" darstellt. Die Darstellung kann auch animiert sein.

Der Touchscreen kann auf unterschiedliche Weise realisiert werden, solange eine Berührung geeignet in elektrische Signale umgesetzt werden kann. Insbesondere sind Art und Aufbau des Touchscreens erfindungsgemäß nicht eingeschränkt. Es kann jeder Touchscreen verwendet werden, der geeignet ist, Informationen in Form von Text, Bild und/oder Animation wiederzugeben und Berührungen in auswertbare Signale umzuwandeln.

Vorzugsweise umfasst der Touchscreen eine Display-Anzeige mit einer Abdeckscheibe, sowie eine zwischen der Display-Anzeige und der Abdeckscheibe angeordnete Touchfolie. Erfindungsgemäß ist der Touchscreen zudem in mindestens zwei Richtungen berührungsempfindlich. Ein Berührelement kann dabei insgesamt berührungsempfindlich ausgestaltet sein oder nur in Teilbereichen. Außerdem kann ein Berührelement in mehrere unabhängig berührungsempfindliche Unterflächen unterteilt sein. Dadurch ist es beispielsweise möglich, durch Berühren eines ersten Berührelementes, dass einem Behandlungsprogramm zugeordnet ist, das Behandlungsprogramm unmittelbar zu starten, wenn eine erste Unterfläche berührt wird, oder aber das Behandlungsprogramm in Hinblick auf Programmparameter zu modifizieren, wenn eine zweite Unterfläche berührt und dadurch eine weitere Bildschirmanzeige dargestellt wird.

Die Art der Display-Anzeige auf dem Touchscreen des Haushaltsgerätes ist erfindungsgemäß nicht eingeschränkt. Beispielsweise kann ein LCD-, LED-, OLED- oder AMOLED-Display-Anzeige verwendet werden. Auf diese Weise können Bedienelemente oder Teilbereiche davon durch ein gezieltes Hinterleuchten und/oder eine andere Farbigkeit optisch hervorgehoben und/oder zurückgesetzt dargestellt werden, wobei "optisch hervorgehoben" einen besonders hohen Kontrast zum Displayhintergrund bedeutet und "optisch zurückgesetzt" einen besonders niedrigen Kontrast zum Displayhintergrund bedeutet.

Material und Ausgestaltung einer optional verwendeten Abdeckscheibe sind erfindungsgemäß ebenfalls nicht eingeschränkt. In einer bevorzugten Ausführungsform des erfindungsgemäßen Haushaltsgeräts wird jedoch eine Abdeckscheibe aus Plexiglas verwendet. Kunststoffe wie Plexiglas haben dabei insbesondere den Vorteil, im Vergleich beispielsweise zu Glas leichter verformbar zu sein, so dass auch Touchscreens mit einer von einer flachen Form abweichenden Form vergleichsweise einfach hergestellt werden können, beispielsweise konkav oder konvex gekrümmt. Vorzugsweise ist die Plexiglas-Abdeckscheibe dabei farblich getönt ausgestaltet, besonders bevorzugt ist sie schwarzgetönt. Auf diese Weise kann die Transparenz der Scheibe angepasst werden, so dass darunterliegende Komponenten des Touchscreens, die nicht sichtbar sein sollen, für einen Benutzer nicht sichtbar sind. In Ausführungsformen des erfindungsgemäßen Haushaltsgeräts kann die Abdeckscheibe zudem in Höhe und/oder Breite die Dimensionen des Touchscreens übertreffen. Auf diese Weise kann eine Plexiglas-Bedienblende mit integriertem Touchscreen realisiert werden.

Die Touchfolie ist erfindungsgemäß ebenfalls nicht eingeschränkt, solange sie Berührungen einer externen Eingabeeinheit in Signale umwandeln kann, die von der Steuereinrichtung zur Steuerung des Haushaltsgeräts verarbeitet werden können.

Es ist allerdings bevorzugt, dass als Bedienelemente Berührungsschalter auf kapazitiver Basis verwendet werden, die kapazitive Sensorelemente aufweisen.

In einer bevorzugten Ausführungsform des erfindungsgemäßen Haushaltsgeräts ist die Touchfolie daher eine kapazitive Touchfolie. Die kapazitive Touchfolie umfasst dabei vorzugsweise mindestens eine Sensorelektrode, welche durch Annäherung und/oder Berührung durch eine externe Eingabeeinheit ein durch Änderungen der elektrischen Kapazität hervorgerufenes elektrisches Signal erzeugen kann. Besonders bevorzugt weist die Touchfolie ein Koordinatennetz aus Sensorelektroden auf. Zwischen den Sensorelektroden befindet sich dabei in der Regel ein isolierendes Material, ein sogenanntes Dielektrikum. Die Kapazität an den Kreuzungspunkten der Sensorelektroden wird dabei im Allgemeinen durch einen Schaltkreis erfasst. Erfindungsgemäß kann das Koordinatennetz aus Elektroden durch das Auftragen eines strukturierten, elektrisch leitfähigen Materials ausgebildet werden. Die Strukturierung kann vielfältige Formen von einfachen geometrischen Formen, wie Kreisen, Rechtecken, usw., bis hin zu komplizierten unregelmäßigen Formen aufweisen, aber auch Linien in X- und Y-Richtung sind möglich. Das elektrisch leitfähige Material ist vorzugsweise transparent, beispielsweise Indium-Zinnoxid (ITO). Besonders bevorzugt können aber auch transparente und leitfähige Lacke und/oder Kleber verwendet werden. Letztere haben insbesondere den Vorteil einer einfacheren Aufbringung auf geformte Oberflächen, beispielsweise konvexe oder konkave Oberflächen, ohne Einbußen in der Funktionalität. Zudem sind leitfähige Lacke und/oder Kleber häufig auch kostengünstiger.

Elektrisch leitfähige Schichten, wie Sensorelektroden oder Schaltkreise, werden im Allgemeinen durch Sputtern oder Siebdruck erzeugt.

Die Touchfolie ist in der Regel mit einer Auswerteelektronik verbunden, welche notwendig ist, um ein durch Änderungen der elektrischen Kapazität hervorgerufenes elektrisches Signal in Folge einer Annäherung und/oder Berührung von Sensorelektroden durch eine externe Eingabeeinheit zu erfassen. Der Begriff "Auswerteelektronik" umfasst dabei in der Regel elektronische Bauteile, Leiterbahnstrukturen, Lötverbindungen und ggf. weitere Komponenten. Die Auswerteelektronik ist im Allgemeinen mit der Steuereinrichtung des Haushaltsgeräts verbunden.

Die Touchfolie ist erfindungsgemäß bevorzugt flexibel ausgestaltet und kann zudem transparent sein und ist vorzugsweise aus einem Kunststoff gefertigt. Sie kann ein- oder mehrlagig ausgestaltet und auf die Abdeckscheibe geklebt oder direkt mittels Spritzgieß- oder Spritzprägeprozessen hinterspritzt werden. In einer Ausführungsform des erfindungsgemäßen Haushaltsgeräts ist die mindestens eine Sensorelektrode bzw. das Koordinatennetz aus Sensorelektroden an der Folie angeordnet. Dabei kann die mindestens eine Sensorelektrode bzw. das Koordinatennetz aus Sensorelektroden entweder auf der der Abdeckscheibe zugewandten oder abgewandten Seite angeordnet sein.

Die Anordnung des Touchscreens am Haushaltsgerät ist nicht besonders eingeschränkt. Vorzugsweise ist jedoch der Touchscreen in einem Winkel von 10° bis 45°, bezogen auf eine vertikale Achse auf einer Grundfläche des Haushaltsgerätes, angebracht.

Die als Touchscreen ausgestaltete Bedieneinrichtung kann in eine Bedienblende des Haushaltsgeräts integriert sein. Die Ausgestaltung der Bedienblende ist dabei erfindungsgemäß nicht eingeschränkt und kann je nach Ausführung des Haushaltsgerätes variieren. Bevorzugt ist die Bedienblende jedoch zumindest teilweise transparent, besonders bevorzugt ist die Bedienblende aus Plexiglas, beispielsweise schwarz, aber kann aber auch farbig sei. In einer weiteren bevorzugten Ausführungsform des Haushaltsgeräts ist die Bedienblende zudem geneigt angeordnet bezüglich des Gehäuses des Haushaltsgeräts, bevorzugt beträgt diese Neigung 10° bis 45°, besonders bevorzugt aber 25°. Auf diese Weise lässt sich insbesondere bei freistehenden Haushaltsgeräten der Touchscreen durch einen Benutzer leicht bedienen, da ein Benutzer bereits aus einer stehenden, nicht gebückten Haltung die Darstellung auf dem Touchscreen sehr gut erkennen kann. Außerdem kann zusätzlich eine Blendung des Benutzers durch reflektiertes Licht reduziert werden.

In einer besonders bevorzugten Ausführungsform der Erfindung ist die Bedieneinrichtung als externer Touchscreen ausgestaltet, d.h. insbesondere als externes mobiles Benutzerendgerät. Ganz besonders bevorzugt wird als Touchscreen ein zur Steuerung des Haushaltgerätes eingerichteter Tablet-Computer, Smartphone oder ein sonstiges mobiles Benutzerendgerät verwendet. Touchscreens finden nämlich im Allgemeinen auch Verwendung in Smartphones und Tablet-Computern. In einer weiteren bevorzugten Ausführungsform des erfindungsgemäßen Haushaltsgeräts ist die als Touchscreen ausgestaltete Bedieneinrichtung daher in ein mobiles externes Benutzerendgerät integriert, wozu in der Regel insbesondere auch eine bestimmte Bediensoftware im externen Benutzerendgerät vorhanden sein muss. Die Art des Benutzerendgeräts ist dabei erfindungsgemäß nicht eingeschränkt, solange es zur externen Kommunikation von Daten fähig ist.

Auf diese Weise wird es einem Benutzer ermöglicht, z. B. ein wasserführendes Haushaltsgerät extern zu bedienen und/oder den Betrieb eines Haushaltsgeräts zur Zubereitung von Lebensmitteln zu überwachen, so dass er sich dazu nicht am Aufstellort des Haushaltsgeräts aufhalten muss. Besitzt beispielsweise ein wasserführendes Haushaltsgerät ein Dosiersystem für Behandlungsmittel, so kann in einer Ausführungsform von einem Benutzer über das mobile Benutzerendgerät z.B. auch der Vorratsstand an Behandlungsmittel im Dosiersystem abgefragt werden. Hierzu kann auf dem Touchscreen ein geeignetes Anzeigeelement auf einem oder mehreren Bildschirmanzeigen dargestellt sein. Der Begriff "Anzeigeelement" bedeutet hierin insbesondere ein Element, das nur eine Anzeige von Informationen ermöglicht, aber keine Eingabe durch einen Benutzer, im Gegensatz zu dem hierin auch benutzten Begriff "Bedienelement", der für ein Element steht, in welchem nicht nur Eingaben durch einen Benutzer gemacht werden können, sondern im Allgemeinen auch Informationen bereitgestellt werden.

In einer weiteren bevorzugten Ausführungsform des erfindungsgemäßen Haushaltsgeräts kann dieses zudem in ein Heimnetzwerk integriert sein und durch dieses bedient und/oder der Betrieb überwacht werden.

In diesen Fällen weist die Steuereinrichtung des Haushaltsgeräts eine Schnittstelle zur externen Kommunikation von Daten auf.

In einer weiteren bevorzugten Ausführungsform enthält das Haushaltsgerät einen Lichtsensor für die Helligkeit im Aufstellraum und die Steuereinrichtung ist eingerichtet, um eine Helligkeit des Touchscreens in Abhängigkeit von der gemessenen Helligkeit im Aufstellraum zu steuern. Lichtsensoren dienen im Allgemeinen zur Detektion einer Umgebungshelligkeit in Form eines Lichtwerts L_{U}. In einer weiteren bevorzugten Ausführungsform des erfindungsgemäßen Haushaltsgeräts ist daher zusätzlich ein Lichtsensor in das Haushaltsgerät integriert. Der Lichtsensor ist dabei erfindungsgemäß nicht eingeschränkt, solange er die Umgebungshelligkeit des Haushaltsgeräts detektieren kann. Der Lichtsensor ist dabei mit der Steuereinrichtung verbunden, welche vorzugsweise bei einer Abnahme der Umgebungshelligkeit die Helligkeit des Touchscreens erhöht, sowie bei einer Zunahme der Umgebungshelligkeit die Helligkeit des Touchscreens reduziert. Hierzu wird vorzugsweise ein Abgleich zwischen einem in der Steuereinrichtung hinterlegten Lichtwert Lₛₒₗₗ und dem Umgebungslichtwert L_{U} von der Steuereinrichtung durchgeführt. So kann einem Benutzer auch bei unterschiedlichen Umgebungshelligkeiten eine für das Auge angenehme Bedienung des Touchscreens bereitgestellt werden, beispielsweise an dunklen Aufstellorten und/oder bei Einbruch der Nacht.

Im Allgemeinen ist es bevorzugt, dass Touchscreens nicht jederzeit auf eine Berührung eines Benutzers reagieren. So ist es z.B. gewünscht, dass ein Smartphone, welches in einer Tasche transportiert wird, für diese Zeit berührungsunempfindlich ist. Ebenso gilt ähnliches beispielsweise für Tablet-Computer. Auf diese Weise kann aber z.B. auch eine Verwendung durch nicht autorisierte Benutzer verhindert werden.

In einer weiteren bevorzugten Ausführungsform des erfindungsgemäßen Haushaltsgeräts ist daher ein Haushaltsgerät bevorzugt, bei dem die Steuereinrichtung eingerichtet ist, nach einer Zeitspanne t_{Block}, in welcher kein anhand einer externen Eingabeeinheit erzeugtes Berührungssignal registriert wurde, eine Benutzung des Touchscreens zu blockieren und erst wieder nach einer Sicherheitseingabe durch einen Benutzer freizugeben. Die Sicherheitseingabe ist nicht beschränkt und umfasst Eingaben, z.B. Wischbewegungen oder die Eingabe von Sicherheitscodes, um einen Sperrbildschirm zu beseitigen. Auf diese Weise kann ein Haushaltsgerät z.B. kindersicher gemacht werden und/oder z.B. eine versehentlich erfolgte Eingabe verhindert werden. Vorzugsweise kann aber von einem Benutzer auch gewählt werden, ob eine Blockierung einer Touchscreen-Bedienung auf dem erfindungsgemäßen Haushaltsgerät aktiv sein soll oder nicht.

Unter einem Haushaltsgerät zur Behandlung von Gegenständen wird vorliegend in der Regel ein Gerät verstanden, das zur Behandlung von Haushaltsgegenständen ausgebildet ist, z.B. von Wäschestücken, Geschirr und Lebensmitteln. Es kann ein Haushaltsgroßgerät sein, wie beispielsweise eine Waschmaschine, ein Waschtrockner, eine Geschirrspülmaschine, ein Gargerät, eine Dunstabzugshaube, ein Kältegerät, eine Kühl-Gefrier-Kombination oder ein Klimagerät. Es kann aber auch ein Haushaltskleingerät sein, wie beispielsweise ein Kaffee-Vollautomat oder eine Küchenmaschine.

Besonders bevorzugt weist allerdings ein wasserführendes Haushaltsgerät zahlreiche Möglichkeiten für ein darin auszuführendes Behandlungsprogramm auf, so dass die Benutzung für einen Benutzer des Haushaltsgerätes kompliziert sein kann. Dann erweist sich der im erfindungsgemäßen Haushaltsgerät vorgesehene Touchscreen sowie dessen Bedienung zur Steuerung des Haushaltsgeräts als besonders vorteilhaft.

Vorzugsweise ist das Haushaltsgerät daher ein wasserführendes Haushaltsgerät ausgewählt aus der Gruppe bestehend aus Waschmaschine, Waschtrockner, Trockner und Geschirrspülmaschine ist. Ganz besonders bevorzugt ist das Haushaltsgerät eine Waschmaschine oder ein Waschtrockner.

Ein wasserführendes Haushaltsgerät verfügt im Allgemeinen über mindestens einen Sensor zur Bestimmung einer für den Betrieb des Haushaltsgeräts wichtigen Eigenschaft. Ist das Haushaltsgerät beispielsweise eine Waschmaschine, so könnten geeignete Sensoren Art und Menge der Beladung mit Wäsche und deren Verschmutzungsgrad ermitteln. Bei einem Waschtrockner könnten die Sensoren beispielsweise neben Art und Menge der Beladung mit Wäsche auch die Feuchte der Wäsche ermitteln. Anhand solcher Daten könnte die Steuereinrichtung bestimmte Verfahrensweisen bewerten und diese Bewertung dann in die Bedienung des Haushaltsgeräts mittels des Touchscreens einfließen lassen. Beispielsweise könnte die Steuereinrichtung die Eingabe eines problematischen Parameterwertes oder von problematischen Kombinationen von Parameterwerten blockieren, um beispielsweise eine Schädigung von empfindlichen Wäschestücken zu vermeiden.

Gegenstand der Erfindung ist außerdem ein Verfahren zum Betrieb eines Haushaltsgerätes zur Behandlung von Gegenständen, aufweisend eine Steuereinrichtung und eine als externer oder interner Touchscreen ausgestaltete Bedieneinrichtung, wobei die Steuereinrichtung eingerichtet ist, um auf dem Touchscreen auf mindestens zwei Bildschirmanzeigen B1, B2 unterschiedlicher Hierarchie erste und zweite einstellbare Steuergrößen des Haushaltsgeräts als voneinander abgegrenzte, flächige, berührungsempfindliche Bedienelemente darzustellen, wobei erste einstellbare Steuergrößen Behandlungsprogramme für die Gegenstände sind und zweite Steuergrößen den Behandlungsprogrammen zugeordnete Programmparameter mit veränderbaren Parameterwerten sind, wobei auf einer hierarchisch höheren Bildschirmanzeige B1 mit einer Hierarchie H1 erste Bedienelemente angezeigt sind, welche Behandlungsprogrammen zugeordnet sind, die durch Berührung eines zugeordneten Bedienelementes ausgewählt werden, und auf mindestens einer hierarchisch niedrigeren Bildschirmanzeige B2 mit einer Hierarchie H2 < H1 zweite Bedienelemente angezeigt sind, welche die Einstellung der Programmparameter ermöglichen, wobei der hierarchisch höheren Bildschirmanzeige B1 die hierarchisch niedrigere Bildschirmanzeige B2 mittelbar oder unmittelbar folgt, wenn ein erstes Bedienelement durch Berühren ausgewählt wird, und zumindest ein Teil der zweiten Bedienelemente längliche Sensorelemente aufweist, in deren Längsrichtung sich ein zugeordneter Parameterwert kontinuierlich oder sprunghaft ändert, so dass der Parameterwert durch Berührung des länglichen Sensorelementes eingestellt werden kann, und die Steuereinrichtung derart eingerichtet ist, dass durch Berührung eines ersten Bedienelementes zwischen den Bildschirmanzeigen B1 und B2 eine Bildschirmanzeige B3 erfolgt, auf der mindestens einige der Programmparameter und deren unveränderbare oder veränderbare Parameterwerte auf dritten Bedienelementen angezeigt sind, wobei bei Berührung eines dritten Bedienelementes, das einem veränderbaren Parameterwert zugeordnet ist, unmittelbar oder mittelbar die Bildschirmanzeige B2 erfolgt, und außerdem die Steuereinrichtung ausgestaltet ist, um auf der Bildschirmanzeige B1 den unmittelbaren Start eines Behandlungsprogrammes zu ermöglichen, indem ein hierfür vorgesehener Teilbereich eines ersten Bedienelementes berührt wird, umfassend die Schritte:
a) Darstellung der ersten Bildschirmanzeige B1;
b) Wechsel zur Darstellung der zweiten Bildschirmanzeige B2, nachdem ein Behandlungsprogramm durch Berühren eines ersten Bedienelementes ausgewählt worden war;
c) Modifizierung eines in der Steuereinrichtung hinterlegten Behandlungsprogrammes anhand der Einstellung von Programmparametern und Parameterwerten durch Berührung von zweiten Bedienelementen; und
d) Durchführung des modifizierten Behandlungsprogrammes.

Die Erfindung hat zahlreiche Vorteile. Durch die erfindungsgemäße Ausgestaltung des Touchscreens kann die Bedienung eines Haushaltsgerätes zur Behandlung von Gegenständen und insbesondere eines wasserführenden Haushaltsgeräts für einen Benutzer intuitiver und übersichtlicher gestaltet werden.

Das erfindungsgemäße Haushaltsgerät stellt dem Benutzer nicht nur eine verbesserte Möglichkeit zur Kommunikation mit dem Haushaltsgerät zur Durchführung eines Behandlungsprogramms zur Verfügung, sondern ermöglicht auch eine verbesserte Informationsausgabe zu Betriebszuständen oder Programmfortschritten an einen Benutzer, beispielsweise in Form von Text, Bild und/oder Animationen. So kann beispielsweise ein Sonderbetriebszustand des Haushaltsgeräts bedingt durch eine Fehlfunktion mittels eines rot blinkenden Alarmzeichens dargestellt werden. Eine als Touchscreen ausgestaltete Bedieneinrichtung ermöglicht somit nicht nur eine verbesserte und erleichterte Bedienung, sondern kann ebenfalls zu mehr Sicherheit beitragen, vor allem, wenn der Touchscreen beispielsweise in ein externes Gerät integriert ist, wie etwa ein Smartphone, so dass einem Benutzer die Kontrolle eines Haushaltsgerätes ermöglicht wird, auch wenn dieser sich nicht in der unmittelbaren Nähe des Gerätes befindet.

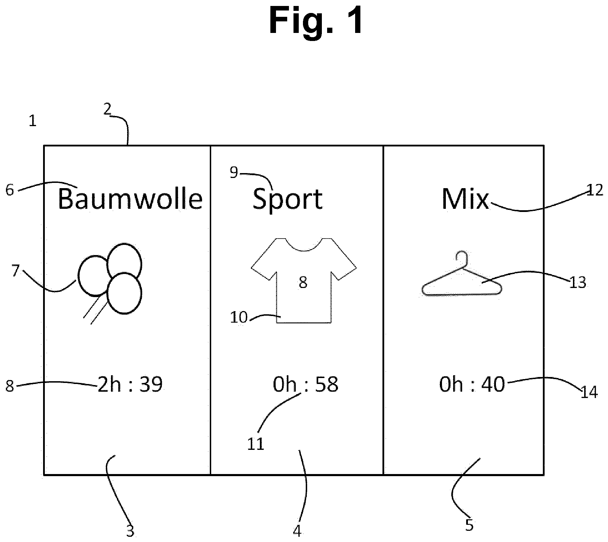

Weitere Einzelheiten der Erfindung ergeben sich aus der nachfolgenden Beschreibung nicht einschränkender Ausführungsformen. Hierbei wird Bezug genommen auf die Figuren 1 bis 6.

Figur 1 zeigt einen Touchscreen 1 einer nicht einschränkenden Ausführungsform eines erfindungsgemäßen Haushaltsgeräts, welches in dieser Ausführungsform als Waschmaschine ausgebildet ist. Beim Touchscreen 1 der Figur 1 ist der gesamte Flächenbereich des Touchscreens 1 berührungsempfindlich. In der Figur 1 ist eine Bildschirmanzeige B1 mit einer hohen Hierarchie gezeigt, auf der drei erste voneinander abgegrenzte, flächige, berührungsempfindliche Bedienelemente 3, 4, 5 dargestellt sind, die Behandlungsprogrammen für Wäsche zugeordnet sind. Weitere erste Bedienelemente, die weiteren Behandlungsprogrammen zugeordnet sind, können durch Scrollen nach links bzw. rechts angezeigt werden. Die ersten Bedienelemente haben hier alle die gleiche Größe. Zum jeweiligen Behandlungsprogramm sind in den ersten Bedienelementen Symbole 6,7,9,10,12,13 gezeigt, welche einen Hinweis auf die Art des Behandlungsprogrammes geben. Die Symbole 8, 11 und 14 geben einen Hinweis auf die Dauer des Behandlungsprogrammes. Den ersten Bedienelementen 3, 4 und 5 sind in der Steuereinrichtung der Waschmaschine erste Steuergrößen, d.h. Behandlungsprogramme, zugeordnet, welche durch die Symbole 6-8, 9-11 und 12-14 dargestellt sind. Als erste Steuergrößen sind dabei exemplarisch die Waschprogramme "Baumwolle" 6, "Sport" 9 und "Mix" 12 dargestellt, sowohl durch den Text "Baumwolle" 6 als auch durch das Bild einer Baumwollpflanze 7, den Text "Sport" 9, einem Bild für Sportbekleidung 10, bzw. dem Text "Mix" 12 und einem Bild zur Darstellung gemischter Wäschestücke 13. Zusätzlich ist als Information für einen Benutzer auch die jeweilige Laufzeit des Behandlungsprogramms durch die Funktionselemente 8, 11, 14 dargestellt. Gleichzeitig stehen die Symbole 8, 11 und 14 bei der hier gezeigten Ausführungsform für einen separat ansteuerbaren Unterbereich der Bedienelemente 3, 4, 5, indem durch Berühren eines dieser Unterbereiche das betreffende Behandlungsprogramm unmittelbar, also ohne weitere Einstellung von Programmparametern in weiteren Bildschirmanzeigen, gestartet werden kann. Durch das Berühren eines dieser Bedienelemente 3, 4, 5 außerhalb der jeweiligen Unterbereiche 8, 11, 14 kann ein Benutzer beispielsweise in eine zweite hier nicht gezeigte Bildschirmdarstellung B2 wechseln, in welcher das Behandlungsprogramm näher bestimmt werden kann. Alternativ lässt sich das Standardprogramm aus der nicht gezeigten Bildschirmdarstellung B2 heraus starten.

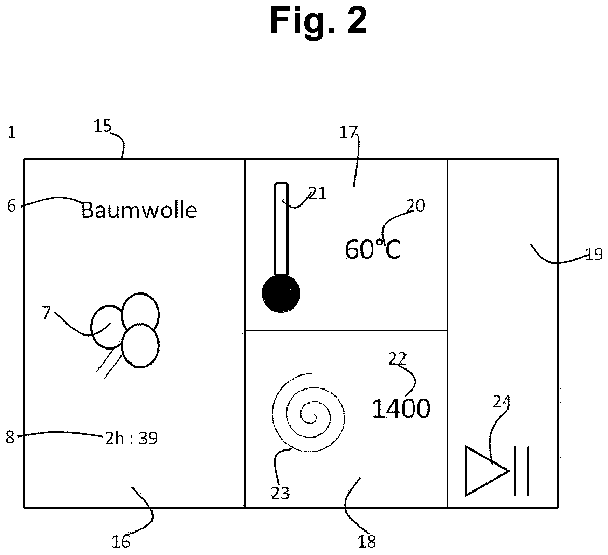

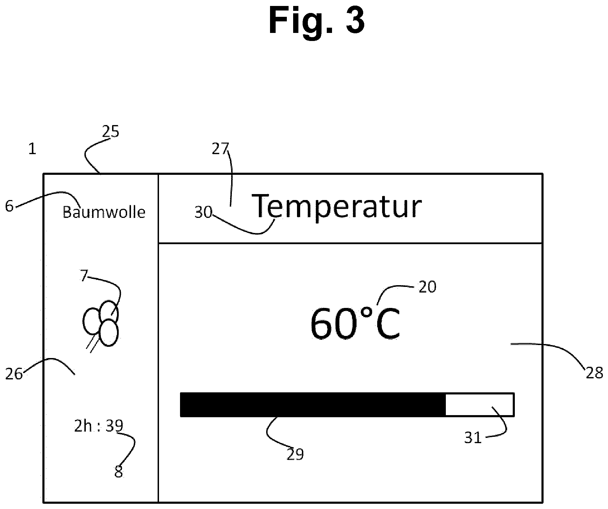

In Figur 2 wird durch eine dritte Bildschirmanzeige B3 15 die berührungsempfindliche Fläche des Touchscreens 1 in vier dritte Bedienelemente 16, 17, 18, 19 unterteilt. Das Bedienelement 16 entspricht hierbei dem ersten Bedienelement 3 aus der Figur 1, welches einem Behandlungsprogramm zugeordnet ist. Es zeigt dabei mittels der Symbole Text "Baumwolle" 6, Bild Baumwollpflanze 7 und Laufzeit 8 das von einem Benutzer in der ersten Bildschirmanzeige B1 ausgewählte Standardprogramm Baumwolle. In den Bedienelementen 17 und 18 sind durch die Symbole Bild Thermometer und Text "60°C" (Bedienelement 17) sowie Text "1400" und Bild Spirale (Bedienelement 18) von einem Benutzer prinzipiell einstellbare Programmparameter dargestellt, wobei das Einstellen von Parameterwerten durch Berühren eines dieser Bedienelemente und Wechsel zu einer neuen Bildschirmanzeige B2 (siehe Figur 3) erfolgt. Der Touchscreen 1 der Fig. 2 ermöglicht das Starten eines Behandlungsprogrammes durch Berühren des Unterbereiches 8 im Bedienelement 16 oder durch Berühren des separaten Bedienelementes 24, welches ein Ein-Aus- bzw. Pause-Bedienelement ist.

In der Figur 3 ist eine zweite Bildschirmanzeige B2 25 dargestellt, in welcher die berührungsempfindliche Fläche des Touchscreens 1 in drei zweite Bedienelemente 26, 27 und 28 unterteilt ist, wobei die Bedienelemente 27 und 28 die nähere Einstellung des Programmparameters Temperatur, hier einer Waschtemperatur, ermöglichen. Der einstellbare Programmparameter Temperatur ist durch den Text "Temperatur" 30 sowie die Angabe des Parameterwertes "60°C" 20 dargestellt. Hierbei weist der Wert "60°C" auf einen aktuell eingestellten Wert hin. Der minimale und/oder der maximale Endwert der Temperatur können - wenn auch in Figur 3 nicht gezeigt - ebenfalls im Bedienelement 28 angezeigt werden, beispielsweise durch Angabe, also Anzeige, der entsprechenden Zahlenwerte oder von diesen Zahlenwerten entsprechenden Begriffe, z.B. "kalt" für einen minimalen Temperaturendwert. Dabei kann der aktuell eingestellte Wert gegenüber diesen Endwerten vergrößert dargestellt werden, vorzugsweise in der Mitte zwischen beiden Endwerten. Diese Möglichkeit der Darstellung ist natürlich nicht auf den Parameter "Temperatur" beschränkt, sondern gilt für alle einstellbaren Parameter.

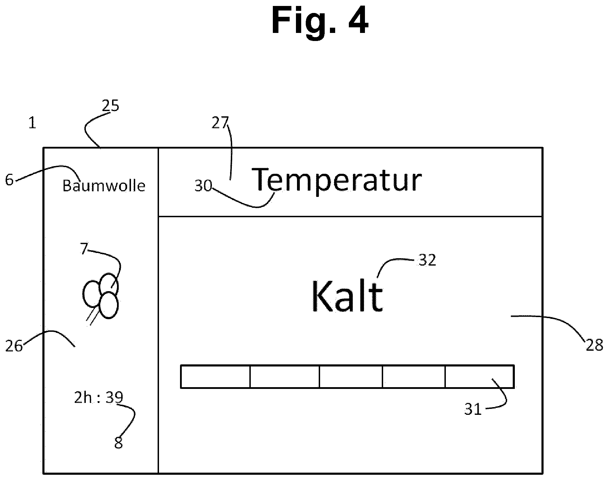

Figur 4 zeigt im Vergleich zur Figur 3 eine zweite Temperatureinstellung Kalt 32 für die Temperatur 30.

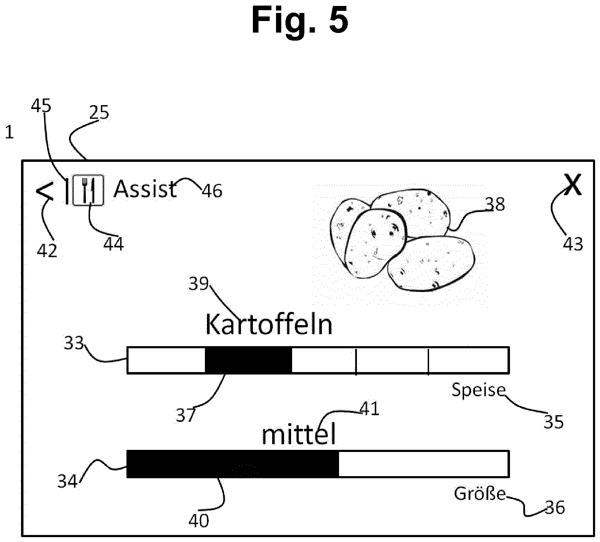

Figur 5 zeigt einen Touchscreen 1 einer nicht einschränkenden Ausführungsform eines erfindungsgemäßen Haushaltsgeräts, welches in dieser Ausführungsform als Gargerät ausgebildet ist. Beim Touchscreen 1 der Figur 5 ist der gesamte Flächenbereich des Touchscreens 1 berührungsempfindlich. In der Figur 5 ist eine zweite Bildschirmanzeige B2 25 gezeigt, in welcher die berührungsempfindliche Fläche des Touchscreens 1 vier zweite Bedienelemente 33, 34, 42 und 43 umfasst. Die zweiten Bedienelemente 33 und 34 ermöglichen dabei die nähere Einstellung der Programmparameter Speise und Größe. Für einen Benutzer sind die jeweils einstellbaren Programmparameter durch die Symbole Text "Speise" 35 und Text "Größe" 36 unterhalb der Bedienelemente 33 und 34 gekennzeichnet. Zur Einstellung der Programmparameter sind die zweiten Bedienelemente 33 und 34 jeweils vollständig als längliche Sensorelemente ausgebildet, wobei das erste längliche Sensorelement 33 ein Balken mit sichtbaren Segmenten ist und das zweite längliche Sensorelement 34 ein Balken mit kontinuierlichen Segmenten. Durch Berühren eines Segments des Balkens 33 kann vom Benutzer die Art der zu garenden Speise, hier Kartoffeln, ausgewählt wählen. Durch Berühren des Balkensegments und/oder Ziehen bis zum Balkensegment wird zusätzlich ein schwarzer Bereich 37 erzeugt, der der ausgewählten Speise entspricht. Die getroffene Auswahl wird durch ein Symbol Bild, hier Kartoffeln, 38 und ein Symbol Text, hier "Kartoffeln", 39 angezeigt. Durch Berühren und/oder Ziehen des Balkens 34 kann ein Benutzer in dieser Ausführungsform die Größe der ausgewählten Speise einstellen. Dies erzeugt einen schwarzen Bereich 40, welcher der getroffenen Auswahl entspricht. Gleichzeitig wird die getroffene Auswahl durch ein Symbol Text, hier "mittel", 41, angezeigt. Die Einstellung des übergeordneten Behandlungsprogramms Zubereiten von Speisen ist gekennzeichnet durch die Symbole Bild Besteck 44 und Text "Assist" 46. Das Symbol Bild vertikale Linie 45 zeigt dabei an, dass es sich um eine Bildschirmanzeige mit einer niedrigeren Hierarchie handelt. Das separate Bedienelement 42 ist gekennzeichnet durch das Symbol Bild < und ermöglicht das Starten des Behandlungsprogramms. Das separate Bedienelement 43 ist dargestellt durch das Symbol Bild X und ermöglicht das Schließen der Bildschirmanzeige B2 25.

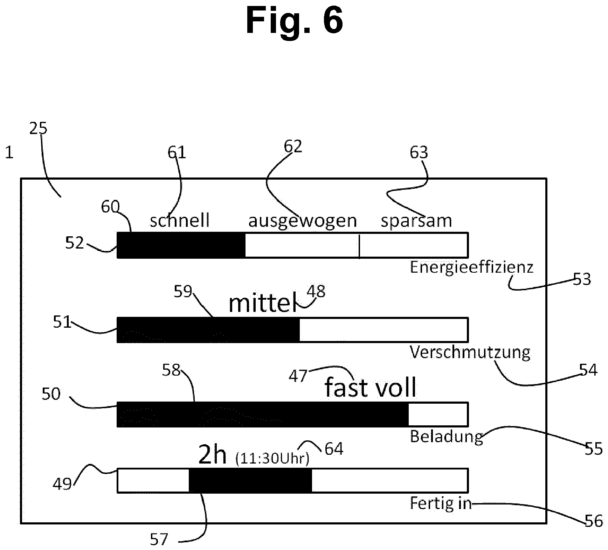

Figur 6 zeigt einen Touchscreen 1 einer nicht einschränkenden Ausführungsform eines erfindungsgemäßen Haushaltsgeräts, welches in dieser Ausführungsform als Geschirrspüler ausgebildet ist. Beim Touchscreen 1 der Figur 6 ist der gesamte Flächenbereich des Touchscreens 1 berührungsempfindlich. In der Figur 6 ist eine zweite Bildschirmanzeige B2 25 gezeigt, in welcher die berührungsempfindliche Fläche des Touchscreens 1 vier zweite Bedienelemente 49, 50, 51 und 52 aufweist. Die Bedienelemente sind jeweils vollständig als längliche Sensorelemente ausgestaltet und ermöglichen einem Benutzer die nähere Einstellung von 4 Programmparametern. Der segmentierte Balken 52 ermöglicht dabei die Einstellung einer Energieeffizienz, wobei der einstellbare Programmparameter durch das Symbol Text Energieeffizienz 53 angezeigt wird. Der segmentierte Balken 52 weist 3 sichtbare Segmente auf, wobei jedem Segment eine Einstellmöglichkeit zugeordnet ist. Diese sind durch die 3 Symbole Text "schnell" 61, Text "ausgewogen" 62 und Text "sparsam" 63 für einen Benutzer gekennzeichnet. Durch Berühren eines dieser Segmente wird ein schwarzer Bereich 60 erzeugt, welcher die getroffene Auswahl anzeigt. Der kontinuierlich segmentierte Balken 51 ermöglicht die Einstellung des Programmparameters Verschmutzung. Der Programmparameter ist als Symbol Text "Verschmutzung" 54 unterhalb des Balkens 51 angezeigt. Durch Berühren und/oder Ziehen des Balkens wird durch einen Benutzer ein schwarzer Bereich 59 erzeugt, welcher die getroffene Einstellung des Parameters anzeigt, wobei zusätzlich ein Symbol Text, hier "mittel", 48 die Auswahl anzeigt. Der kontinuierlich segmentierte Balken 50 ermöglicht die Einstellung des Programparameters Beladung, welcher durch das Symbol Text "Beladung" 55 angezeigt wird. Auch hier kann ein Benutzer durch Berühren und/oder Ziehen des Balkens einen schwarzen Bereich 58 erzeugen, welcher die getroffene Einstellung des Programmparameters Beladung anzeigt. Zusätzlich wird die durch den Benutzer getroffene Einstellung mittels eines Symbols Text, hier "fast voll", 47 angezeigt. Der kontinuierlich segmentierte Balken 49 ermöglicht die Einstellung des Programmparameters Startverzögerung. Durch Berühren und/oder Ziehen des Balkens wird ein schwarzer Bereich 57 erzeugt, der einer Startzeitverzögerung des Behandlungsprogramms entspricht. Die Laufzeit und die ausgewählte Beendigungszeit des Behandlungsprogramms werden dem Benutzer als Symbol Text Laufzeit, hier "2h", und Uhrzeit, hier "(11:30 Uhr)", 64 angezeigt. Durch das Berühren der Bildschirmanzeige B2 25 außerhalb der Balken kann ein Benutzer in die Hierarchieebene B1 wechseln, aus welcher das Behandlungsprogramm gestartet werden kann.

### Bezugszeichen

- 1: Touchscreen
- 2: Bildschirmanzeige B1
- 3: erstes Bedienelement, Behandlungsprogramm Baumwolle
- 4: erstes Bedienelement, Behandlungsprogramm Sportbekleidung
- 5: erstes Bedienelement, Behandlungsprogramm gemischte Kleidung
- 6: Symbol Text Baumwolle
- 7: Symbol Bild Baumwollpflanze
- 8: Symbol Angabe Text Laufzeit
- 9: Symbol Text Sport
- 10: Symbol Bild Sportbekleidung
- 11: Symbol Angabe Text "Laufzeit"
- 12: Symbol Text "Mix" für gemischte Kleidung
- 13: Symbol für Behandlungsprogramm Sport
- 14: Symbol Angabe Text Laufzeit
- 15: Bildschirmanzeige B3
- 16: Bedienelement Behandlungsprogramm Baumwolle
- 17: Bedienelement für Programmparameter Temperatur
- 18: Bedienelement für Programmparameter Drehzahl
- 19: Ein-Aus-Bedienelement
- 20: Symbol für Temperatur, Text "60°C"
- 21: Symbol für Temperatur, Bild Thermometer
- 22: Symbol für Drehzahl, Text "1400"
- 23: Symbol für Programmparameter Drehzahl, Bild Spirale
- 24: Ein-Aus-Bedienelement, berührungsempfindlicher Unterbereich
- 25: Bildschirmanzeige B2
- 26: Bedienelement Behandlungsprogramm Baumwolle
- 27: Bedienelement mit Angabe des einstellbaren Programmparameters
- 28: Bedienelement für die Einstellung des Programmparameters Temperatur
- 29: erzeugter, eingestellter Temperaturwert auf dem länglichen Sensorelement
- 30: Symbol Text "Temperatur"
- 31: längliches Sensorelement, Balken
- 32: Symbol Text "Kalt"
- 33: Sensorelement Balken zur Einstellung des Programmparameters Speise
- 34: Sensorelement Balken zur Einstellung des Programmparameters Größe
- 35: Symbol Text "Speise"
- 36: Symbol Text "Größe"
- 37: erzeugter, eingestellter Parameter Speise
- 38: Symbol Bild Kartoffeln
- 39: Symbol Text "Kartoffeln"
- 40: erzeugter, eingestellter Parameter Größe
- 41: Symbol Text "mittel"
- 42: Bedienelement zum Starten des Behandlungsprogramms mit Symbol Bild <
- 43: Bedienelement zum Schließen der Bildschirmanzeige B2 mit Symbol Bild X
- 44: Symbol Bild Besteck
- 45: Symbol Bild vertikale Linie
- 46: Symbol Text "Assist"
- 47: Symbol Text "fast voll"
- 48: Symbol Text "mittel"
- 49: Sensorelement Balken zur Einstellung des Programmparameters Startverzögerung
- 50: Sensorelement Balken zur Einstellung des Programmparameters Beladung
- 51: Sensorelement Balken zur Einstellung des Programmparameters Verschmutzung
- 52: Sensorelement Balken zur Einstellung des Programmparameters Energieeffizienz
- 53: Symbol Text "Energieeffizienz"
- 54: Symbol Text "Verschmutzung"
- 55: Symbol Text "Beladung"
- 56: Symbol Text "Fertig in"
- 57: erzeugter, eingestellter Parameter Startverzögerung
- 58: erzeugter, eingestellter Parameter Beladung
- 59: erzeugter, eingestellter Parameter Verschmutzung
- 60: erzeugter, eingestellter Parameter Energieeffizienz
- 61: Symbol Text "schnell"
- 62: Symbol Text "ausgewogen"
- 63: Symbol Text "sparsam"
- 64: Symbol Text 2h (11:30Uhr)

## Patentansprüche

1. Haushaltsgerät zur Behandlung von Gegenständen, aufweisend eine Steuereinrichtung und eine als externer oder interner Touchscreen (1) ausgestaltete Bedieneinrichtung, wobei die Steuereinrichtung eingerichtet ist, um auf dem Touchscreen (1) auf mindestens zwei Bildschirmanzeigen B1 (2), B2 (15, 25) unterschiedlicher Hierarchie erste und zweite einstellbare Steuergrößen des Haushaltsgeräts als voneinander abgegrenzte, flächige, berührungsempfindliche Bedienelemente (3,4,5) darzustellen, wobei erste einstellbare Steuergrößen Behandlungsprogramme für die Gegenstände sind und zweite Steuergrößen den Behandlungsprogrammen zugeordnete Programmparameter mit veränderbaren Parameterwerten sind, wobei auf einer hierarchisch höheren Bildschirmanzeige B1 mit einer Hierarchie H1 erste Bedienelemente (3,4,5) angezeigt sind, welche Behandlungsprogrammen zugeordnet sind, die durch Berührung eines zugeordneten Bedienelementes (3,4,5) ausgewählt werden, und auf mindestens einer hierarchisch niedrigeren Bildschirmanzeige B2 mit einer Hierarchie H2 < H1 zweite Bedienelemente (26,27,28) angezeigt sind, welche die Einstellung der Programmparameter ermöglichen, wobei der hierarchisch höheren Bildschirmanzeige B1 die hierarchisch niedrigere Bildschirmanzeige B2 mittelbar oder unmittelbar folgt, wenn ein erstes Bedienelement (3,4,5) durch Berühren ausgewählt wird, und zumindest ein Teil (28) der zweiten Bedienelemente längliche Sensorelemente (31) aufweist, in deren Längsrichtung sich ein zugeordneter Parameterwert kontinuierlich oder sprunghaft ändert, so dass der Parameterwert durch Berührung des länglichen Sensorelementes (31) eingestellt werden kann, **dadurch gekennzeichnet, dass** die Steuereinrichtung derart eingerichtet ist, dass durch Berührung eines ersten Bedienelementes (3,4,5) zwischen den Bildschirmanzeigen B1 und B2 eine Bildschirmanzeige B3 erfolgt, auf der mindestens einige der Programmparameter und deren unveränderbare oder veränderbare Parameterwerte auf dritten Bedienelementen (16, 17, 18, 19) angezeigt sind, wobei bei Berührung eines dritten Bedienelementes (16, 17, 18, 19), das einem veränderbaren Parameterwert zugeordnet ist, unmittelbar oder mittelbar die Bildschirmanzeige B2 erfolgt, und außerdem die Steuereinrichtung ausgestaltet ist, um auf der Bildschirmanzeige B1 (2) den unmittelbaren Start eines Behandlungsprogrammes zu ermöglichen, indem ein hierfür vorgesehener Teilbereich (8,11,14) eines ersten Bedienelementes (3,4,5) berührt wird.

2. Haushaltsgerät nach Anspruch 1, **dadurch gekennzeichnet, dass** die Steuereinrichtung dazu eingerichtet ist, dass die Durchführung eines Behandlungsprogrammes und/oder der Übergang zwischen zwei Programmschritten durch akustische und/oder optische Signale angezeigt wird.

3. Haushaltsgerät nach Anspruch 2, **dadurch gekennzeichnet, dass** die Durchführung eines Behandlungsprogrammes auf dem Touchscreen (1) durch eine sich zeitlich ändernde Bilddarstellung angezeigt wird, wobei in der Steuereinrichtung eine Zuordnung zwischen den Behandlungsprogrammen und den sich ändernden Bilddarstellungen hinterlegt ist.

4. Haushaltsgerät nach Anspruch 3 oder 4, **dadurch gekennzeichnet, dass** die Steuereinrichtung derart ausgestaltet ist, dass eine Frequenz und/oder Intensität der akustischen und/oder optischen Signale von der Art eines durchgeführten Programmschrittes und/oder eines Überganges zwischen zwei Programmschritten abhängt, wobei in der Steuereinrichtung ein Zusammenhang zwischen der Frequenz und/oder Intensität der akustischen und/oder optischen Signale und der Art eines durchgeführten Programmschrittes und/oder eines Überganges zwischen zwei Programmschritten hinterlegt ist.

5. Haushaltsgerät nach einem der Ansprüche 1 bis 4, **dadurch gekennzeichnet, dass** als Bedienelemente Berührungsschalter auf kapazitiver Basis verwendet werden, die kapazitive Sensorelemente aufweisen.

6. Haushaltsgerät nach einem der Ansprüche 1 bis 5, **dadurch gekennzeichnet, dass** der Touchscreen (1) in einem Winkel von 10° bis 45°, bezogen auf eine vertikale Achse auf einer Grundfläche des Haushaltsgerätes, angebracht ist.

7. Haushaltsgerät nach einem der Ansprüche 1 bis 6, **dadurch gekennzeichnet, dass** die Bedieneinrichtung als externer Touchscreen (1) ausgestaltet ist, insbesondere ein zur Steuerung des Haushaltgerätes eingerichteter Tablet-Computer oder Smartphone ist.

8. Haushaltsgerät nach einem der Ansprüche 1 bis 7, **dadurch gekennzeichnet, dass** es einen Soundgenerator und einen Lautsprecher zur Erzeugung und Wiedergabe von im Zusammenhang mit den Behandlungsprogrammen stehenden akustischen Signalen aufweist.

9. Haushaltsgerät nach einem der Ansprüche 1 bis 8, **dadurch gekennzeichnet, dass** das Haushaltsgerät einen Lichtsensor für die Helligkeit im Aufstellraum enthält und die Steuereinrichtung eingerichtet ist, um eine Helligkeit des Touchscreens (1) in Abhängigkeit von der gemessenen Helligkeit im Aufstellraum zu steuern.

10. Haushaltsgerät nach einem der Ansprüche 1 bis 9, **dadurch gekennzeichnet, dass** die Steuereinrichtung eingerichtet ist, nach einer Zeitspanne t_{Block}, in welcher kein anhand einer externen Eingabeeinheit erzeugtes Berührungssignal registriert wurde, eine Benutzung des Touchscreens (1) zu blockieren und erst wieder nach einer Sicherheitseingabe durch einen Benutzer freizugeben.

11. Haushaltsgerät nach einem der Ansprüche 1 bis 10, **dadurch gekennzeichnet, dass** das Haushaltsgerät ein wasserführendes Haushaltsgerät ausgewählt aus der Gruppe bestehend aus Waschmaschine, Waschtrockner, Trockner und Geschirrspülmaschine ist.

12. Haushaltsgerät nach Anspruch 1, **dadurch gekennzeichnet, dass** es eine Waschmaschine oder ein Waschtrockner ist.

13. Verfahren zum Betrieb eines Haushaltsgerätes zur Behandlung von Gegenständen, aufweisend eine Steuereinrichtung und eine als externer oder interner Touchscreen (1) ausgestaltete Bedieneinrichtung, wobei die Steuereinrichtung eingerichtet ist, um auf dem Touchscreen (1) auf mindestens zwei Bildschirmanzeigen B1 (2), B2 (15, 25) unterschiedlicher Hierarchie erste und zweite einstellbare Steuergrößen des Haushaltsgeräts als voneinander abgegrenzte, flächige, berührungsempfindliche Bedienelemente (3,4,5) darzustellen, wobei erste einstellbare Steuergrößen Behandlungsprogramme für die Gegenstände sind und zweite Steuergrößen den Behandlungsprogrammen zugeordnete Programmparameter mit veränderbaren Parameterwerten sind, wobei auf einer hierarchisch höheren Bildschirmanzeige B1 (2) mit einer Hierarchie H1 erste Bedienelemente (3,4,5) angezeigt sind, welche Behandlungsprogrammen zugeordnet sind, die durch Berührung eines zugeordneten Bedienelementes (3,4,5) ausgewählt werden, und auf mindestens einer hierarchisch niedrigeren Bildschirmanzeige B2 (15,25) mit einer Hierarchie H2 < H1 zweite Bedienelemente (26,27,28) angezeigt sind, welche die Einstellung der Programmparameter ermöglichen, wobei der hierarchisch höheren Bildschirmanzeige B1 (2) die hierarchisch niedrigere Bildschirmanzeige B2 (15,25) mittelbar oder unmittelbar folgt, wenn ein erstes Bedienelement (3,4,5) durch Berühren ausgewählt wird, und zumindest ein Teil (28) der zweiten Bedienelemente (26,27,28) längliche Sensorelemente (31) aufweist, in deren Längsrichtung sich ein zugeordneter Parameterwert kontinuierlich oder sprunghaft ändert, so dass der Parameterwert durch Berührung des länglichen Sensorelementes (31) eingestellt werden kann, und die Steuereinrichtung derart eingerichtet ist, dass durch Berührung eines ersten Bedienelementes (3,4,5) zwischen den Bildschirmanzeigen B1 (2) und B2 eine Bildschirmanzeige B3 erfolgt, auf der mindestens einige der Programmparameter und deren unveränderbare oder veränderbare Parameterwerte auf dritten Bedienelementen (16, 17, 18, 19) angezeigt sind, wobei bei Berührung eines dritten Bedienelementes (16, 17, 18, 19), das einem veränderbaren Parameterwert zugeordnet ist, unmittelbar oder mittelbar die Bildschirmanzeige B2 erfolgt, und außerdem die Steuereinrichtung ausgestaltet ist, um auf der Bildschirmanzeige B1 (2) den unmittelbaren Start eines Behandlungsprogrammes zu ermöglichen, indem ein hierfür vorgesehener Teilbereich (8,11,14) eines ersten Bedienelementes (3,4,5) berührt wird, umfassend die Schritte:
a) Darstellung der ersten Bildschirmanzeige B1 (2) ;
b) Wechsel zur Darstellung der zweiten Bildschirmanzeige B2 (25), nachdem ein Behandlungsprogramm durch Berühren eines ersten Bedienelementes (3,4,5) ausgewählt worden war;
c) Modifizierung eines in der Steuereinrichtung hinterlegten Behandlungsprogrammes anhand der Einstellung von Programmparametern und Parameterwerten durch Berührung von zweiten Bedienelementen (26,27,28); und
d) Durchführung des modifizierten Behandlungsprogrammes.

## Claims

1. Household appliance for treating objects, having a control facility and an operating facility configured as an external or internal touchscreen (1), wherein the control facility is designed to display first and second settable control variables of the household appliance as demarcated, flat, touch-sensitive operating elements on the touchscreen (1) on at least two screen displays B1 (2), B2 (15, 25) of different hierarchy, wherein first settable control variables are treatment programs for the objects and second control variables are program parameters with changeable parameter values assigned to the treatment programs, wherein first operating elements (3, 4, 5) assigned to treatment programs which are selected by touching an assigned first operating element (3, 4, 5) are displayed on a hierarchically higher screen display B1 with a hierarchy H1 and second operating elements (26, 27, 28) that allow the setting of the program parameters are displayed on at least one hierarchically lower screen display B2 with a hierarchy H2 < H1, wherein the hierarchically higher screen display B1 is followed indirectly or directly by the hierarchically lower screen display B2 when a first operating element (3, 4, 5) is selected by touching and at least a part (28) of the second operating elements has elongated sensor elements (31), in the longitudinal direction of which an assigned parameter value changes continuously or non-continuously so that the parameter value can be set by touching the elongated sensor element (31), **characterised in that** the control facility is designed in such a manner that touching a first operating element (3, 4, 5) between the screen displays B1 and B2 results in a screen display B3, on which at least some of the program parameters and their unchangeable or changeable parameter values are displayed on third operating elements (16, 17, 18, 19), wherein the screen display B2 results directly or indirectly when a third operating element (16, 17, 18, 19) assigned to a changeable parameter value is touched and the control facility is also configured to allow the direct start of a treatment program on the screen display B1 (2in that a sub-region (8, 11, 14) of a first operating element (3, 4, 5) provided for this purpose is touched.

2. Household appliance according to claim 1, **characterised in that** the control facility is designed in such a manner that the performance of a treatment program and/or the transition between two program stages is displayed by means of acoustic and/or visual signals.

3. Household appliance according to claim 2, **characterised in that** the performance of a treatment program is displayed on the touchscreen (1) by an image display that changes over time, wherein an assignment between the treatment programs and the changing image displays is stored in the control facility.

4. Household appliance according to claim 3 or 4, **characterised in that** the control facility is configured in such a manner that a frequency and/or intensity of the acoustic and/or visual signals is a function of the type of program stage performed and/or a transition between two program stages, wherein a relationship between the frequency and/or intensity of the acoustic and/or visual signals and the type of program stage performed and/or a transition between two program stages is stored in the control facility.

5. Household appliance according to one of claims 1 to 4, **characterised in that** touch switches with capacitive sensor elements are used in a capacitive manner as operating elements.

6. Household appliance according to one of claims 1 to 5, **characterised in that** the touchscreen (1) is positioned at an angle of 10° to 45° to a vertical axis on a base surface of the household appliance.

7. Household appliance according to one of claims 1 to 6, **characterised in that** the operating facility is configured as an external touchscreen (1), in particular a tablet computer or smartphone designed for controlling the household appliance.

8. Household appliance according to one of claims 1 to 7, **characterised in that** it has a sound generator and a speaker for generating and playing acoustic signals related to the treatment programs.

9. Household appliance according to one of claims 1 to 8, **characterised in that** the household appliance contains a light sensor for brightness in the room where it is installed and the control facility is designed to control brightness of the touchscreen (1) as a function of the measured brightness in the room.

10. Household appliance according to one of claims 1 to 9, **characterised in that** the control facility is designed to block use of the touchscreen (1) after a time interval t_{Block}, during which no touch signal generated on the basis of an external input unit has been registered, and only to allow it again after a security input by a user.

11. Household appliance according to one of claims 1 to 10, **characterised in that** the household appliance is a water-conducting household appliance selected from the group comprising washing machine, washer/dryer, tumble dryer and dishwasher.

12. Household appliance according to claim 1, **characterised in that** it is a washing machine or washer/dryer.

13. Method for operating a household appliance for treating objects, having a control facility and an operating facility configured as an external or internal touchscreen (1), wherein the control facility is designed to display first and second settable control variables of the household appliance as demarcated, flat, touch-sensitive operating elements (3, 4, 5) on the touchscreen (1) on at least two screen displays B1 (2), B2 (15, 25) of different hierarchy, wherein first settable control variables are treatment programs for the objects and second control variables are program parameters with changeable parameter values assigned to the treatment programs, wherein first operating elements (3, 4, 5) assigned to treatment programs which are selected by touching an assigned first operating element (3, 4, 5) are displayed on a hierarchically higher screen display B1 (2) with a hierarchy H1 and second operating elements (26, 27, 28) that allow the setting of the program parameters are displayed on at least one hierarchically lower screen display B2 (15, 25) with a hierarchy H2 < H1, wherein the hierarchically higher screen display B1 (2) is followed indirectly or directly by the hierarchically lower screen display B2 (15, 25) when a first operating element (3, 4, 5) is selected by touching and at least a part (28) of the second operating elements (26, 27, 28) has elongated sensor elements (31), in the longitudinal direction of which an assigned parameter value changes continuously or non-continuously so that the parameter value can be set by touching the elongated sensor element (31), and the control facility is designed in such a manner that touching a first operating element (3, 4, 5) between the screen displays B1 (2) and B2 results in a screen display B3, on which at least some of the program parameters and their unchangeable or changeable parameter values are displayed on third operating elements (16, 17, 18, 19), wherein the screen display B2 results directly or indirectly when a third operating element (16, 17, 18, 19) assigned to a changeable parameter value is touched and the control facility is also configured to allow the direct start of a treatment program on the screen display B1 (2), in that a sub-region (8, 11, 14) of a first operating element (3, 4, 5) provided for this purpose is touched, comprising the steps:
a) Displaying the first screen display B1 (2);
b) Switching to display the second screen display B2 (25), after a treatment program has been selected by touching a first operating element (3, 4, 5);
c) Modifying a treatment program stored in the control facility based on the program parameter and parameter value settings by touching second operating elements (26, 27, 28); and
d) Performing the modified treatment program.

## Revendications

1. Appareil ménager destiné au traitement d'objets, présentant un dispositif de commande et un dispositif d'utilisation conçu comme écran tactile (1) externe ou interne, le dispositif de commande étant configuré pour représenter sur l'écran tactile (1), sur au moins deux affichages écran B1 (2), B2 (15, 25) de hiérarchie différente, des premières et des deuxièmes grandeurs de commande réglables de l'appareil ménager en tant qu'éléments de commande (3, 4, 5) tactiles, plans, séparés les uns des autres, les premières grandeurs de commande réglables étant des programmes de traitement pour les objets et les deuxièmes grandeurs de commande étant des paramètres de programme associés aux programmes de traitement, dotés de valeurs de paramètre modifiables, des premiers éléments de commande (3, 4, 5) étant affichés sur un affichage écran B1 de hiérarchie plus élevée, ayant une hiérarchie H1, lesquels sont associés à des programmes de traitement qui sont sélectionnés par contact d'un élément de commande associé (3, 4, 5), et des deuxièmes éléments de commande (26, 27, 28) étant affichés sur au moins un affichage écran B2 de hiérarchie plus basse, ayant une hiérarchie H2 < H1, lesquels permettent le réglage des paramètres de programme, l'affichage écran B2 de hiérarchie plus basse succédant indirectement ou directement à l'affichage écran B1 de hiérarchie plus élevée lorsqu'un premier élément de commande (3, 4, 5) est sélectionné par contact, et au moins une partie (28) des deuxièmes éléments de commande présentant des éléments capteurs (31) oblongs dans la direction longitudinale desquels une valeur de paramètre associée se modifie de manière continue ou par sauts de sorte que la valeur de paramètre peut être réglée par contact de l'élément capteur (31) oblong, **caractérisé en ce que** le dispositif de commande est configuré de manière à ce que par contact d'un premier élément de commande (3, 4, 5), il s'ensuive un affichage écran B3 entre les affichages écran B1 et B2, sur lequel au moins quelques-uns des paramètres de programme et leurs valeurs de paramètre invariables ou variables sont affichés sur des troisièmes éléments de commande (16, 17, 18, 19), l'affichage écran B2 ayant lieu directement ou indirectement lors du contact d'un troisième élément de commande (16, 17, 18, 19) qui est associé à une valeur de paramètre modifiable, et le dispositif de commande étant en outre configuré pour permettre le départ direct d'un programme de traitement sur l'affichage écran B1 (2) du fait qu'une zone partielle (8, 11, 14) d'un premier élément de commande (3, 4, 5), ménagée à cet effet, est touchée.

2. Appareil ménager selon la revendication 1, **caractérisé en ce que** le dispositif de commande est configuré afin que la réalisation d'un programme de traitement et/ou la transition entre deux étapes de programme soient affichées par des signaux acoustiques et/ou optiques.

3. Appareil ménager selon la revendication 2, **caractérisé en ce que** la réalisation d'un programme de traitement sur l'écran tactile (1) est affichée par une représentation d'image se modifiant temporellement, une affectation entre les programmes de traitement et les représentations d'image se modifiant étant mémorisée dans le dispositif de commande.

4. Appareil ménager selon la revendication 3 ou 4, **caractérisé en ce que** le dispositif de commande est configuré de manière à ce qu'une fréquence et/ou une intensité des signaux acoustiques et/ou optiques dépendent du type d'une étape de programme réalisée et/ou d'une transition entre deux étapes de programme, une relation entre la fréquence et/ou l'intensité des signaux acoustiques et/ou optiques et le type d'une étape de programme réalisée et/ou d'une transition entre deux étapes de programme étant mémorisée dans le dispositif de commande.

5. Appareil ménager selon l'une quelconque des revendications 1 à 4, **caractérisé en ce que** des commutateurs tactiles à base capacitive sont utilisés en tant qu'éléments de commande, lesquels présentent des éléments capteurs capacitifs.

6. Appareil ménager selon l'une quelconque des revendications 1 à 5, **caractérisé en ce que** l'écran tactile (1) est installé dans un angle de 10° à 45° par rapport à un axe vertical sur une surface de base de l'appareil ménager.

7. Appareil ménager selon l'une quelconque des revendications 1 à 6, **caractérisé en ce que** le dispositif d'utilisation est configuré comme écran tactile (1) externe, notamment comme une tablette ordinateur configurée pour la commande de l'appareil ménager, ou comme un smartphone.

8. Appareil ménager selon l'une quelconque des revendications 1 à 7, **caractérisé en ce qu'**il présente un générateur de sons et un haut-parleur pour générer et reproduire les signaux acoustiques en relation avec les programmes de traitement.

9. Appareil ménager selon l'une quelconque des revendications 1 à 8, **caractérisé en ce que** l'appareil ménager comprend un capteur de lumière pour la luminosité dans la pièce d'installation et **en ce que** le dispositif de commande est configuré pour commander une luminosité de l'écran tactile (1) en fonction de la clarté mesurée dans la pièce d'installation.

10. Appareil ménager selon l'une quelconque des revendications 1 à 9, **caractérisé en ce que** le dispositif de commande est configuré pour bloquer une utilisation de l'écran tactile (1) après un laps de temps t_{Block} pendant lequel aucun signal de contact généré à l'aide d'une unité d'entrée externe n'a été enregistré, et pour la libérer seulement de nouveau après une entrée de sécurité effectuée par un utilisateur.

11. Appareil ménager selon l'une quelconque des revendications 1 à 10, **caractérisé en ce que** l'appareil ménager est un appareil ménager à circulation d'eau sélectionné dans le groupe constitué par lave-linge, lave-linge séchant, sèche-linge et lave-vaisselle.

12. Appareil ménager selon la revendication 1, **caractérisé en ce qu'**il est un lave-linge ou un lave-linge séchant.

13. Procédé de fonctionnement d'un appareil ménager destiné au traitement d'objets, présentant un dispositif de commande et un dispositif d'utilisation conçu comme écran tactile (1) externe ou interne, le dispositif de commande étant configuré pour représenter sur l'écran tactile (1), sur au moins deux affichages écran B1 (2), B2 (15, 25) de hiérarchie différente, des premières et des deuxièmes grandeurs de commande réglables de l'appareil ménager en tant qu'éléments de commande (3, 4, 5) tactiles, plans, séparés les uns des autres, les premières grandeurs de commande réglables étant des programmes de traitement pour les objets et les deuxièmes grandeurs de commande étant des paramètres de programme associés aux programmes de traitement, dotés de valeurs de paramètre modifiables, des premiers éléments de commande (3, 4, 5) étant affichés sur un affichage écran B1 (2) de hiérarchie plus élevée, ayant une hiérarchie H1, lesquels sont associés à des programmes de traitement qui sont sélectionnés par contact d'un élément de commande associé (3, 4, 5), et des deuxièmes éléments de commande (26, 27, 28) étant affichés sur au moins un affichage écran B2 (15, 25) de hiérarchie plus basse, ayant une hiérarchie H2 < H1, lesquels permettent le réglage des paramètres de programme, l'affichage écran B2 (15, 25) de hiérarchie plus basse succédant indirectement ou directement à l'affichage écran B1 (2) de hiérarchie plus élevée lorsqu'un premier élément de commande (3, 4, 5) est sélectionné par contact, et au moins une partie (28) des deuxièmes éléments de commande présentant des éléments capteurs (31) oblongs dans la direction longitudinale desquels une valeur de paramètre associée se modifie de manière continue ou par sauts de sorte que la valeur de paramètre peut être réglée par contact de l'élément capteur (31) oblong, et le dispositif de commande étant configuré de manière à ce que par contact d'un premier élément de commande (3, 4, 5), il s'ensuive un affichage écran B3 entre les affichages écran B1 (2) et B2, sur lequel au moins quelques-uns des paramètres de programme et leurs valeurs de paramètre invariables ou variables sont affichés sur des troisièmes éléments de commande (16, 17, 18, 19), l'affichage écran B2 ayant lieu directement ou indirectement lors du contact d'un troisième élément de commande (16, 17, 18, 19) qui est associé à une valeur de paramètre modifiable, et le dispositif de commande étant en outre configuré pour permettre le départ direct d'un programme de traitement sur l'affichage écran B1 (2) du fait qu'une zone partielle (8, 11, 14) d'un premier élément de commande (3, 4, 5), ménagée à cet effet, est touchée, comprenant les étapes :
a) représentation du premier affichage écran B1 (2) ;
b) passage à la représentation du deuxième affichage écran B2 (25) après qu'un programme de traitement a été sélectionné par contact d'un premier élément de commande (3, 4, 5) ;
c) modification d'un programme de traitement mémorisé dans le dispositif de commande, à l'aide du réglage de paramètres de programme et de valeurs de paramètre, par contact de deuxièmes éléments de commande (26, 27, 28) ; et
d) réalisation du programme de traitement modifié.
